# EUROPÄISCHE PATENTSCHRIFT

(11) **EP 0 386 482 B1**
(45) Veröffentlichungstag und Bekanntmachung des Hinweises auf die Patenterteilung: **06.12.1995**
(21) Anmeldenummer: 90102395.2
(22) Anmeldetag: 07.02.1990
(51) Int. Cl.: H04Q 11/00, H04J 14/02

(54) **Optisches Nachrichtenübertragungssystem für den Teilnehmeranschlussbereich**
Optical data transmission system for subscriber connection
Système de transmission optique pour connexion d'abonné

(30) Priorität: 08.03.1989 DE 3907495
(43) Veröffentlichungstag der Anmeldung: 12.09.1990
(73) Patentinhaber: Alcatel SEL Aktiengesellschaft, D-70435 Stuttgart (DE)
(72) Erfinder: Matt, Hans Jürgen, Dr., D-7148 Remseck 1 (DE); Franz, Bernd, D-7127 Pleidelsheim (DE); Heidemann, Rolf, Dr., D-7146 Tamm (DE); Krimmel, Heinz G., D-7000 Stuttgart 30 (DE)
(74) Vertreter: Kugler, Hermann, Dipl.-Phys.

(56) Entgegenhaltungen:
- EP-A- 0 028 669
- DE-A- 3 239 593
- DE-A- 3 308 987
- GB-A- 2 195 508
- US-A- 3 996 526
- PROCEEDINGS OF THE IEEE, Band 68, Nr. 10, Oktober 1980, Seiten 1291-1299, New York, US; K. CHANG: "Fibreguide systems in the subscriber loop"
- CONFERENCE RECORD; INTERNATIONAL CONFERENCE ON COMMUNICATIONS, Boston, 10. -14. Juni 1979, Heft 2, Sitzung 28, Vortrag 3, Seiten 1-8, BOSTON, US, P.H. CHOUINARD et al.: "Description and performance review of the Yorkville integrated services fibre optic trial"
- CONFERENCE RECORD, NATIONAL TELECOMMUNICATIONS CONFERENCE; Washington, DC, 26.- 29. November 1979, Heft 2, Sitzung 37, Vorschlag 6, Seiten 1-5; Washington, DC, US, K. ASATANI:"Wavelength-division-multiplexing and its applications"
- IEEE JOURNAL ON SELECTED AREAS IN COMMUNICATION, Band. SAC-4, Nr. 9, Dezember 1986, Seiten 1458-1467, New York, US; H. TOBA et al.: "A conceptual design on optical frequency-division-multiplexing distribution systems with optically tunable filters"
- PROCEEDINGS;, IEEE PACIFIC RIM CONFERENCE ON COMMUNICATIONS, COMPUTERS AND SIGNAL PROCESSING, Victoria, CN, 4. - 5. Juni 1987, Seiten 327-330; C.P. TOU: "Code division multiplexing for optical fibre communications"
- PHILIPS TELECOMMUNICATIONS REVIEW, Band 40, Nr. 2, Juli 1982, Seiten 129-140, Hilversum, NL; E. MEIER-ENGELEN et al.: "Fault locating and backscatter measurements on glass fibres"
- PATENT ABSTRACTS OF JAPAN, Band 8, Nr. 127 (E-250)[1564], 14. Juni 1984; & JP-A-59 39 136 (HITACHI) 03-03-1984

## Beschreibung

Die Erfindung betrifft ein optisches Nachrichtenübertragungssystem nach dem Oberbegriff des Patentanspruchs 1.

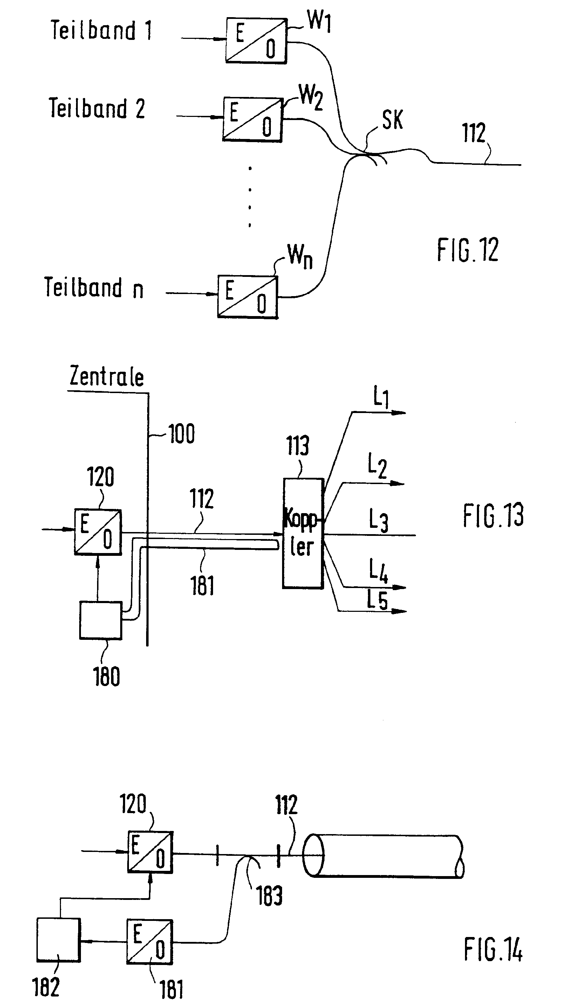

Ein solches System ist bekannt aus IEEE Transactions on Communications, VOL. COM-29, N0. 6, 1981, Seiten 868 bis 885, insbesondere aus der Fig. 13 auf Seite 878 und der zugehörigen Beschreibung.

Hierbei handelt es sich um ein System zur Verteilung von Fernsehsignalen von einer Zentrale zu an diese Zentrale angeschlossenen Teilnehmern und zur doppelt gerichteten Übertragung von Fernsprech- und Datensignalen zwischen den Teilnehmern und der Zentrale, wobei die Zentrale praktisch die Ortsvermittlungsstelle ist. Jeder an die Zentrale angeschlossene Teilnehmer ist über zwei Lichtwellenleiter mit der Zentrale verbunden. Über einen ersten Lichtwellenleiter, in Fig. 13 oben dargestellt, werden die von der Zentrale zu den Teilnehmern, in der sogenannten Abwärtsrichtung, zu übertragenden Signale, also Fernsehsignale, und die in Abwärtsrichtung zu übertragenden Fernsprech- und Datensignale übertragen, wobei zur Übertragung, wie Fig. 13 (b) zeigt, das Frequenzmultiplex-Verfahren verwendet wird. Über einen zweiten Lichtwellenleiter werden die von dem Teilnehmer zur Zentrale, in der sogenannten Aufwärtsrichtung, zu übertragenden Signale, nämlich die zur Zentrale gehenden Fernsprechsignale und Datensignale übertragen. Das System hat also für jeden Teilnehmer einen Lichtwellenleiter für die Abwärtsrichtung und einen Lichtwellenleiter für die Aufwärtsrichtung.

Somit erfordert das System in der Zentrale für jeden Teilnehmer einen optischen Sender und einen optischen Empfänger und läßt sich daher nur zu beträchtlich hohen Kosten realisieren.

Aus Conference Record, International Conference on Communications, Boston, 10.-14. Juni 1979 und aus Proceedings of the IEEE, Band 68, Nr.10, Oktober 1980, S.1291-1299, New York, US, sind optische Nachrichtenübertragungssysteme bekannt, welche dieselben Nachteile wie das zuvor betrachtete bekannte System haben. Auch jene Systeme haben nämlich zur Verbindung zwischen einer Zentrale und Teilnehmern für jeden Teilnehmer einen oder zwei Lichtwellenleiter, also teilnehmerindividuelle Lichtwellenleiter von der Zentrale bis zu den Teilnehmern. Im Gegensatz zu dem vorstehend betrachteten bekannten System und dem System, das Gegenstand der vorliegenden Erfindung ist, sind jene bekannte Systeme nicht dazu eingerichtet, Nachrichtensignale zu den Teilnehmern zu verteilen, d.h. alle Teilnehmer mit denselben Nachrichtensignalen zu versorgen. Die Fernsehsignale sind dort ebenso wie die Telefonsignale teilnehmerindividuelle Signale und werden von den einzelnen Teilnehmern individuell abgerufen.

Die Erfindung geht davon aus, daß in nächster Zukunft eher die Verteilung von Fernsehsignalen als eine teilnehmerindividuelle Versorgung mit Fernsehprogrammen stattfinden wird.

Es ist daher die Aufgabe der Erfindung, ein optisches Nachrichtenübertragungssystem für den Teilnehmeranschlußbereich der eingangs genannten Art anzugeben, bei dem Fernseh- und Tonprogramme zu Teilnehmern verteilt und die bidirektionalen Dienste Fernsprechen und Datenübertragung abgewickelt werden können und das sich zu geringeren Kosten als das eingangs genannte bekannte System realisieren läßt.

Die Erfindung wird wie im Patentanspruch 1 angegeben gelöst. Weiterbildungen ergeben sich aus den Unteransprüchen.

Hinsichtlich der Lösung wird darauf hingewiesen, daß eine Verteilung der in Abwärtsrichtung zu übertragenden Signale auf eine Gruppe von Teilnehmern mit optischen Mitteln und die Zusammenfassung von von dieser Gruppe zur Zentrale zu sendenden Signalen ebenfalls mit optischen Mitteln bekannt ist aus der DE-A1 35 07 064.

Dort erfolgt allerdings die übertragung in Abwärtsrichtung in digitaler Form und im Zeitmultiplex und die Übertragung in Aufwärtsrichtung im Wellenlängenmultiplex mit teilnehmerindividuellen Wellenlängen.

Die Erfindung wird nun anhand der Zeichnungen beispielsweise näher erläutert.

Es zeigen:
- Fig. 1: den Grundaufbau des erfindungsgemäßen Systems,
- Fig. 2: eine erste Alternative zu Fig. 1,
- Fig. 3: eine Modulations- und Multiplexeinrichtung zur Aufbereitung eines die von der Zentrale zu der Gruppe von Teilnehmern zu übertragenden Fernsprech- und Datensignale enthaltenden Frequenzbandes,
- Fig. 4: ein erstes Ausführungsbeispiel einer Modulations- und Multiplexeinrichtung zur Übertragung der Fernseh-, Fernsprech- und Datensignale von der Zentrale zu der Gruppe von Teilnehmern,
- Fig. 5: ein erstes Ausführungsbeispiel einer Demodulationseinrichtung entsprechend der Modulationseinrichtung nach Fig. 4,
- Fig. 6: eine teilnehmerseitige Demodulationseinrichtung und Modulationseinrichtung für Fernsprech- und Datensignale,
- Fig. 7: eine in der Zentrale pro Teilnehmer vorhandene Demodulationseinrichtung für Fernsprech- und Datensignale,
- Fig. 8: ein zweites Ausführungsbeispiel einer Modulations- und Multiplexeinrichtung zur Übertragung der Fernseh-, Fernsprech- und Datensignale von der Zentrale zu der Gruppe von Teilnehmern,
- Fig. 9: eine Demodulationseinrichtung entsprechend der Modulationseinrichtung nach Fig. 8,
- Fig. 10: eine zweite Alternative zu Fig. 1,
- Fig. 11: eine schematische Aufteilung des Frequenzmultiplexsignals in Teilbänder,
- Fig. 12: eine Anordnung mehrerer Wandler zur Umwandlung der Teilbänder in optische Signale,
- Fig. 13: eine erste Schutzvorrichtung zur Feststellung einer Unterbrechung der Lichtwellenleiter-Strecke und
- Fig. 14: eine zweite, alternative Schutzvorrichtung zur Feststellung einer Unterbrechung der Lichtwellenleiter-Strecke.

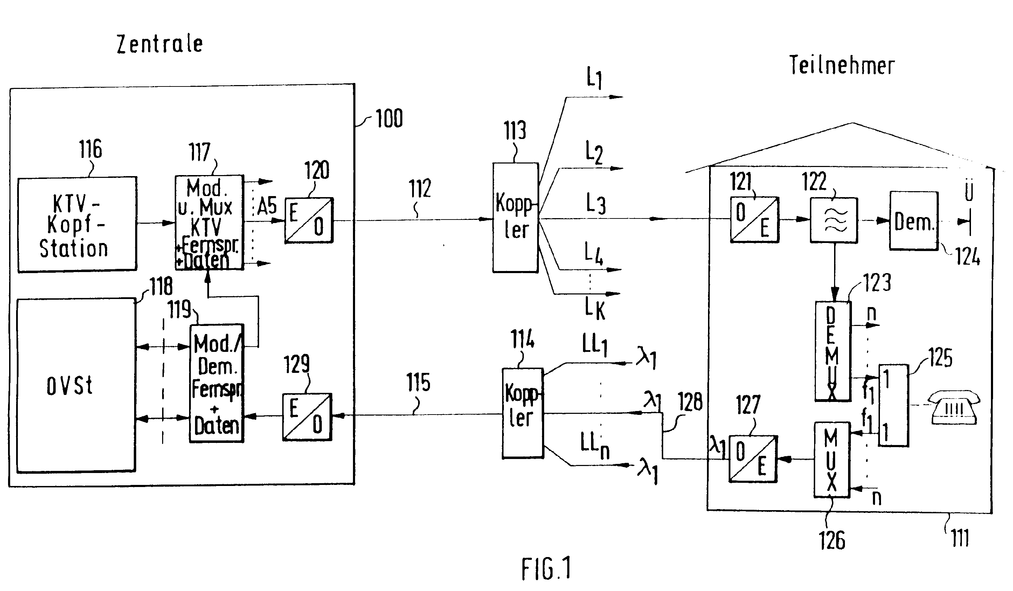

In Fig. 1 zeigt die linke Hälfte die in der Zentrale für eine Gruppe von Teilnehmern vorhandenen Einrichtungen und die rechte Hälfte die bei einem Teilnehmer dieser Gruppe vorhandenen Einrichtungen. Die Zentrale trägt das Bezugszeichen 100, und die bei einem Teilnehmer vorhandenen Einrichtungen, die als in einem einzigen Haus befindlich dargestellt sind, tragen als Gesamtheit das Bezugszeichen 111. Von der Zentrale 100 führt ein erster Lichtwellenleiter 112, der den zu einer Gruppe gehörenden Teilnehmern gemeinsam ist, zu einem Koppler 113, und von dort führen teilnehmerindividuelle Lichtwellenleiter L₁ bis Lₖ jeweils zu einem Teilnehmer der Gruppe. Auf diesem Übertragungsweg erfolgt die Übertragung sämtlicher in der sogenannten Abwärtsrichtung von der Zentrale zu den Teilnehmern zu übertragenden Signale, also der an alle Teilnehmer zu verteilenden Fernsehsignale, Tonsignale und der teilnehmerindividuellen Fernsprech- und Datensignale.

In der Aufwärtsrichtung, also von den Teilnehmern zur Zentrale, verläuft von jedem Teilnehmer einer Gruppe, wie es für den Teilnehmer 111 gezeigt ist, ein Lichtwellenleiter zu einem Koppler 114. Dieser koppelt die von den Teilnehmern der Gruppe über teilnehmerindividuelle Lichtwellenleiter LL₁ bis LLₙ empfangenen teilnehmerindividuellen Signale in einen für diese Gruppe gemeinsamen Lichtwellenleiter 115 ein, der die Gesamtheit dieser Signale zur Zentrale überträgt. Die Koppler 113 und 114 sind im einfachsten Falle die an sich bekannten aus Lichtwellenleitern hergestellten Sternkoppler, z.B. bekannt aus der oben genannten DE-A1 35 07 064 oder der DE-A-32 20 817. Die Koppler können Teile von sogenannten Vorfeldeinrichtungen sein, sie können aber auch der Kabelausrüstung zugeordnet sein. Bisweilen werden sie auch selbst als Vorfeldeinrichtungen bezeichnet.

Statt der einfachen Sternkoppler, die als passive Vorfeldeinrichtungen betrachtet werden können, können auch aktive Vorfeldeinrichtungen vorhanden sein. Diese enthalten z.B. einen oder mehrere optische Verstärker. Eine aktive Vorfeldeinrichtung wäre auch eine mit einem Optisch-elektrisch-Wandler, einem elektrischen Verstärker und einem Elektrisch-optisch Wandler, letzterer mit Verzweigung auf mehrere Ausgänge. Gegebenenfalls kann bei diesem Beispiel auch eine Verteilung des elektrischen Ausgangssignals auf mehrere elektrische Leitungen erfolgen, so daß dann mehrere Elektrisch-optisch Wandler erforderlich wären.

Sternkoppler oder Vorfeldeinrichtungen befinden sich in der Nähe einer Gruppe von Teilnehmern, was auch bedeuten kann, daß sie sich z.B. im Keller eines Mehrfamilienhauses befinden, wenn die Gruppe von Teilnehmern in einem Mehrfamilienhaus wohnt. Letzteres gilt vorzugsweise für aktive Vorfeldeinrichtungen.

Im folgenden werden die in der Zentrale 100 vorhandenen Einrichtungen erläutert. Eine sogenannte KTV-Kopfstation (KTV = Kabelfernsehen) liefert an ihrem Ausgang ein Frequenzmultiplexsignal, das vorzugsweise gemäß dem heute bei der Deutschen Bundespost eingeführten Standard die für den Dienst des Kabelfernsehens zu übertragenden Programme, 35 Fernsehprogramme und 30 UKW-Programme, enthält. Dieses Frequenzmultiplexsignal wird jedoch nicht wie üblich über Koaxialleitungen zu den Teilnehmern verteilt, sondern erfindungsgemäß in eine Modulations- und Multiplexeinrichtung 117 eingegeben. Die Modulations- und Multiplexeinrichtung 117 fügt den von der KTV-Kopfstation 116 stammenden Signalen Fernsprech- und Datensignale hinzu, wie an späterer Stelle erläutert wird.

Diese zu der Gruppe von Teilnehmern zu übertragenden Fernsprech- und Datensignale stammen von einer Ortsvermittlungsstelle 118, von der sie in eine Modulations-/Demodulationseinrichtung 119 eingegeben werden, die, wie an späterer Stelle erläutert wird, aus ihnen ein Frequenzband aufbereitet, das wiederum in der Modulationseinrichtung 117 mit dem von der KTV-Kopfstation empfangenen Frequenzmultiplexsignal vereinigt wird.

Am Ausgang der Modulations- und Multiplexeinrichtung 117 erscheint somit ein elektrisches Signal, das die zu verteilenden Programme und die teilnehmerindividuell zu den Teilnehmern der Gruppe zu übertragenden Fernsprech- und Datensignale enthält. Dieses Signal wird in einem Elektrisch-optisch-Wandler 120 in ein optisches Signal umgesetzt, indem es dessen Ausgangslicht intensitätsmoduliert, über den Lichtwellenleiter 112 zur Vorfeldeinrichtung, d.h. zum Koppler 113, übertragen, dort auf die Teilnehmer der Gruppe, beispielsweise auf fünf Teilnehmer (k = 5) verteilt und von dort mit teilnehmerindividuellen Lichtwellenleitern L₁ bis Lₖ zu den Teilnehmern Übertragen. In der Zeichnung ist der mit L₃ bezeichnete Lichtwellenleiter mit dem Teilnehmer 111 verbunden.

Beim Teilnehmer wird das empfangene optische Signal in einem Optisch-elektrisch-Wandler 121 in ein elektrisches Signal umgesetzt. In einer Frequenzweiche 122 werden die darin enthaltenen Fernsprechsignale zu einem Leistungsaufteiler oder Demultiplexer 123 abgezweigt, und die Fernseh- und Tonprogramm-Signale werden in einem Demodulator 124 in die ursprüngliche von der KTV-Kopfstation erzeugte Standard-Form demoduliert und an einen übergabepunkt Ü gegeben, an dem die Zuständigkeit des Netzbetreibers endet und die des Teilnehmers beginnt. An diesem Übergabepunkt werden die Signale in der gleichen Form und Qualität wie beim heute bei der Deutschen Bundespost oder einer anderen Postverwaltung eingeführten Kabelfernsehdienst abgegeben.

Der Demultiplexer 123 trennt das die Fernsprech- und Datensignale enthaltende Frequenzband in die einzelnen Signale 1 bis n (z.B. n = 64) auf und gibt jedes der Signale auf jeweils einen Modem, wovon nur der für ein einziges Signal gezeigt ist und mit 125 bezeichnet ist. Dieser Modem setzt das Signal in die für das jeweilige Endgerät, Fernsprechapparat oder Datenendgerät oder ISDN-Teilnehmereinrichtung, geeignete und standardisierte Form um. Der Demultiplexer sorgt dafür, daß nur die für die Endgeräte des Teilnehmers 111 bestimmten Fernsprech- oder Datensignale zu diesen Endgeräten gelangen können. Im einfachsten Falle hat der Teilnehmer nur ein einziges Endgerät, z.B einen Fernsprechapparat, und daher einen einzigen Modem 125, der an seinem Eingang eines der Ausgangssignale des Demultiplexers 123 empfängt.

Falls viele Teilnehmer in einem einzigen Mehrfamilienhaus wohnen, sind die Einrichtungen 123, 125, 126 und 127 beim KTV-Übergabepunkt Ü installiert und viele Teilnehmer sind über die bestehende Hausverkabelung daran angeschlossen.

Die vom Endgerät zur Zentrale zu sendenden Fernsprech- oder Datensignale moduliert der Modulator des Modems 125 einem Träger mit einer teilnehmerindividuellen Frequenz auf. Falls der Teilnehmer mehrere Endgeräte, z.B. mehrere Fernsprechapparate hat, modulieren mehrere Modems verschiedene Träger, und ein Multiplexer 126 faßt diese Signale zu einem Frequenzband zusammen. Entweder ein einziger modulierter Träger oder ein Frequenzband aus mehreren modulierten Trägern wird dann in einem Elektrisch-optisch-Wandler 127 in ein optisches Signal umgesetzt, das von dort über einen für den Teilnehmer individuell vorgesehenen Lichtwellenleiter 128 zum Koppler 114 Übertragen wird. Die zu einer Gruppe gehörenden Teilnehmer verwenden für jedes zu einem Teilnehmer der Gruppe gehörendes Endgerät eine individuelle Trägerfrequenz. Es sind z.B. 64 solcher Trägerfrequenzen vorgesehen. Statt 64 kann aber auch eine andere Zahl, allgemein m genannt, von Tragerfrequenzen vorgesehen Sein. Die Gesamtheit der zu einer Gruppe von Teilnehmern zusammengefaßten Teilnehmer kann also bis zu m Endgeräte für Fernsprechen oder Datenübertragung betreiben. Die Aufteilung auf die einzelnen Teilnehmer richtet sich nach deren individuellen Kommunikationsbedürfnissen.

Die bei den verschiedenen Teilnehmern vorhandenen Elektrisch-optisch-Wandler 127 arbeiten alle etwa mit derselben Betriebswellenlänge λ1, so daß in den Koppler 114 z.B. 64 optische Signale mit etwa derselben Betriebswellenlänge λ1 eingestrahlt werden, die sich durch die Frequenz (Frequenzen) des den jeweiligen Elektrisch-optisch-Wandler 127 modulierenden Trägers (Trägergemisches) unterscheiden.

Dieses Prinzip der übertragung verschiedener Signale über einen einzigen Lichtwellenleiter ist für sich bekannt aus der DE-A 32 39 593.

Die Lichtwellenleiter, die von den Teilnehmern der Gruppe zum Koppler 114 führen, sind mit LL₁ bis LLₙ bezeichnet. Ihre Anzahl ist nicht von der Anzahl der Lichtwellenleiter L₁ bis Lₖ abhängig. Es können z.B. bis zu m Lichtwellenleiter sein; es ist zweckmäßig, m möglichst groß zu wählen, z.B. m = 64 ... 128 und möglichst viele der Fernsprech- oder Datensignale nach Modulation auf die Träger zu einem Signalgemisch zusammenzufassen, damit möglichst wenige Optisch-elektrisch-Wandler und möglichst wenige Lichtwellenleiter LL₁ bis LLₙ für die Übertragung bis zum Koppler 114 benötigt werden.

In der Zentrale befindet sich ein Optisch-elektrisch-Wandler 129, der das empfangene Gemisch aus optischen Signalen mit derselben Wellenlänge in ein Gemisch aus elektrischen Signalen mit unterschiedlichen Trägerfrequenzen umsetzt und dieses auf den Eingang des Modulators/Demodulators 119 gibt. Dieser trennt das elektrische Signalgemisch in die einzelnen Signale auf, demoduliert diese und stellt sie an seinen Ausgängen, z.B. 64 Ausgängen, als der Norm entsprechende Fernsprech- oder Datensignale als Eingangssignale für die Ortsvermittlungsstelle 118 zur Verfügung. An den Eingängen dieser Ortsvermittlungsstelle 118 liegen die Fernsprech- oder Datensignale in derselben Form und Qualität vor, die für die übertragung von Fernsprech- oder ISDN-Signalen oder Datensignalen vorgeschrieben ist.

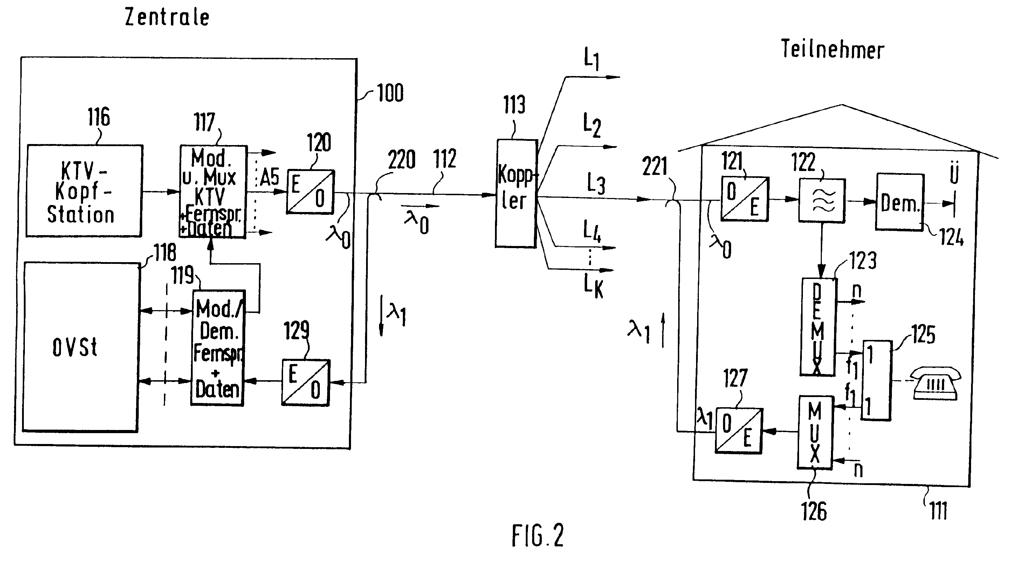

Die Fig. 2 zeigt eine Alternative zu Fig. 1, bei der sowohl der der Gruppe von Teilnehmern 111 gemeinsame Lichtwellenleiter 112 als auch die teilnehmerindividuellen Lichtwellenleiter L₁ bis Lₖ zur Übertragung in den beiden Richtungen verwendet werden. Für die Übertragung in der Abwärtsrichtung wird eine erste Wellenlänge λ0, z.B. 1300 nm, und für die Übertragung in der Gegenrichtung wird eine zweite Wellenlänge λ1, z.B. 800 nm, verwendet, wobei letztere ebenso wie beim System nach Fig. 1 allen Teilnehmern der Gruppe gemeinsam ist. Bei der Zentrale und bei jedem Teilnehmer sind wellenlängenselektive Koppler 220 und 221 vorhanden, die die beiden Wellenlangen λ0 und λ1 ohne große optische Verluste und mit sehr geringem Nebensprechen voneinander trennen. Im übrigen unterscheidet sich das System nach Fig. 2 nicht von dem nach Fig. 1, so daß für beide die nachfolgend beschriebenen Ausführungsbeispiele gültig sind.

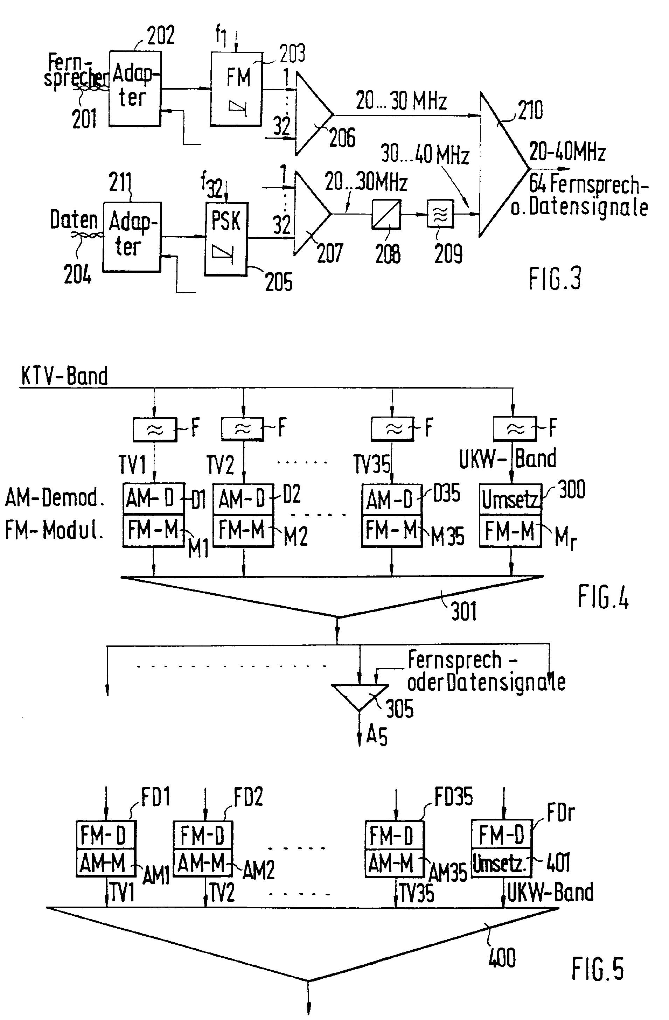

Anhand der Figuren 3 und 4 wird nun beschrieben, welche Art der Modulation und Multiplexbildung die Modulations- und Multiplexeinrichtung des Modulators/Demodulators 119 und die Modulations- und Multiplexeinrichtung 117 durchführen.

In Fig. 3 ist der Modulator/Multiplex-Teil des in Fig. 1 oder Fig. 2 gezeigten Modulators/Demodulators 119 für Fernsprech- und Datensignale, der sich in der Zentrale befindet, dargestellt. Unter "Fernsprech- und Datensignale" werden folgende Signale verstanden: Analogsignale eines herkömmlichen Fernsprechapparates, Digitalsignale mit 64 kbit/s eines digitalen Fernsprechapparates, Digitalsignale mit 144 kbit/s eines ISDN-Endgerätes und digitale Datensignale mit 2 bis 34 Mbit/s.

Die von der Ortsvermittlungsstelle (118 in Fig. 1) über eine normale Zweidraht-Leitung 201 eingehenden Fernsprechsignale werden in einem sogenannten Adapter 202 in eine Form umgesetzt, die zu einer Übertragung durch ein Vierdrahtsystem mit Frequenzmodulation geeignet ist. Der Adapter 202 hat im wesentlichen die Funktion eines Umsetzers, z.B für Zweidraht-Vierdraht-Umsetzung, für Wählzeichen, Wecksignale usw. Das durch diese Umsetzung entstandene Signal gelangt auf den Modulationseingang eines Modulators 203 und wird dort einem Träger mit der Frequenz f₁ mittels Frequenzmodulation aufmoduliert. Diese Trägerfrequenz f₁ ist individuell einem Fernsprech-Teilnehmeranschluß eines der Teilnehmer der anhand von Fig 1 erläuterten Gruppe von Teilnehmern zugeordnet.

Die Teilnehmer dieser Gruppe können, wie oben angedeutet, statt Fernsprechanschlüsse auch andere Anschlüsse, z.B. Anschlüsse an ein digitales Netz, z.B. an ISDN (Integrated Services Digital Network), haben. In diesem Falle gelangen die digitalen ISDN-Signale, wie dies für eine weitere Zweidraht-Leitung 204 gezeigt ist, auf einen Adapter 211 für ISDN-Signale, und dessen Ausgangs-Digitalsignal zum Modulationseingang eines für Digitalsignale geeigneten Modulators 205, in dem es z.B. durch Phasenumtastung (engl.: phase shift keying, PSK) oder Frequenzumtastung (eng.: frequency shift keying, FSK) einem Träger mit einer diesem ISDN-Teilnehmer individuell zugeordneten Frequenz f₃₂ aufmoduliert wird.

Bei dem eben gezeigten Beispiel entstehen auf diese Weise eine erste Gruppe von 32 Trägern mit verschiedenen Frequenzen aus dem Frequenzband von 20 bis 30 MHz, die entweder mit analogen Fernsprechsignalen frequenzmoduliert oder mit Digitalsignalen, z.B. ISDN-Signalen, durch Phasen- oder Frequenzumtastung moduliert sind. Im Beispiel ist von der einen Gruppe die Modulation eines Trägers mit der Frequenz f₁ durch Frequenzmodulation mit Fernsprechsignalen und bei der zweiten Gruppe die Modulation eines Trägers mit der Frequenz f₃₂ durch Phasenumtastmodulation mit ISDN-Signalen gezeigt. Beliebige Mischungen sind möglich.

Im gezeigten Beispiel faßt ein erster Leistungsaddierer 206 maximal 32 modulierte Träger mit den verschiedenen Trägerfrequenzen f₁ bis f₃₂ zu einem Frequenzband mit einer Bandbreite von 20 bis 30 MHz zusammen, und ein zweiter Leistungsaddierer 207 faßt ebenso eine Gruppe von maximal 32 modulierten Trägern mit den Frequenzen f₁ bis f₃₂ zu einem Frequenzband mit der gleichen Bandbreite 20 bis 30 MHz zusammen. Eines dieser beiden Frequenzbänder wird mittels eines Umsetzers 208 und eines nachgeschalteten Filters 209 in das Frequenzband 30 bis 40 MHz umgesetzt, und diese beiden Frequenzbänder werden in einem Leistungsaddierer 210 zu einem Frequenzband von 20 bis 40 MHz zusammengefaßt, das bis zu 64 Fernsprech- und Datensignale enthalten kann. Dieses Ausgangssignal ist das Ausgangssignal des in Fig. 1 gezeigten Modulators/Demodulators 119, das in die ebenfalls dort gezeigte Modulations- und Multiplexeinrichtung 117 eingegeben wird, deren Funktion nun anhand der Fig. 4 erläutert wird.

Diese Einrichtung 117 (Fig. 1) empfängt von der KTV-Kopfstation das Kabelfernseh-Signalgemisch, wie es heutzutage in das Kabelfernsehnetz der Deutschen Bundespost eingespeist wird. Dieses enthält bis zu 35 Fernsehsignale, die durch Amplitudenmodulation verschiedenen Trägern aufmoduliert sind, und das UKW-Band von 87 bis 108 MHz. Insgesamt handelt es sich um ein Frequenzband von etwa 45 bis 450 MHz.

Nach einem ersten Verfahren - genannt Einzelkanal-FM - wird dieses Band durch eine Filteranordnung F in das UKW-Band und die 35 Fernsehsignale enthaltenden modulierten Träger, die mit TV1 bis TV35 bezeichnet sind, aufgetrennt. AM-Demodulatoren D1 bis D35 demodulieren die amplitudenmodulierten Träger und bringen dadurch die Fernsehsignale in das Basisband. Den AM-Demodulatoren nachgeschaltete Frequenzmodulatoren M1 bis M35 modulieren diese Basisband-Fernsehsignale Trägern mit verschiedenen Frequenzen durch Frequenzmodulation auf. Das UKW-Band wird in einem Umsetzer 300 in ein geeignetes Band umgesetzt, und mit diesem wird in einem nachgeschalteten Modulator Mᵣ ein weiterer Träger frequenzmoduliert. Bei geeigneter Umsetzung kann eventuell der nachgeschaltete Modulator Mᵣ entfallen. Die Filter F können in den AM-Demodulatoren D1 bis D35 bzw. im UKW-Band-Umsetzer 300 integriert sein.

Die auf diese Weise erzeugten frequenzmodulierten Träger faßt ein Leistungsaddierer 301 zu einem Fernseh-Rundfunk-Signalgemisch zusammen, das vom Ausgang dieses Leistungsaddierers 301 mehreren, z.B. 10, Leistungsaddierern zugeführt wird, von denen nur ein einziger gezeigt und mit 305 bezeichnet ist. Das Signalgemisch am Ausgang des Leistungsaddierers 301 ist vorteilhaft so beschaffen, daß die die Signale enthaltenden Träger Frequenzen haben, die innerhalb einer Oktave liegen. Ein solcher Leistungsaddierer 305 fügt dem Fernseh-Rundfunk-Signalgemisch ein für eine Gruppe von Teilnehmern bestimmtes Fernsprech-/ISDN-Band mit einer Bandbreite von 20 bis 40 MHz hinzu, so daß jeder dieser Leistungsaddierer an seinem Ausgang ein für eine Gruppe von Teilnehmern bestimmtes Signalgemisch, enthaltend die zu allen Teilnehmern gleichermaßen zu übertragenden Fernseh- und Rundfunksignale und die jeweils für eine Gruppe von Teilnehmern bestimmten Fernsprech- oder ISDN-Signale, bereitstellt. An dem mit A₅ bezeichneten Ausgang des Leistungsaddierers 305 erscheint beispielsweise das über den in Fig. 1 dargestellten Übertragungsweg zu einer speziellen Gruppe von Teilnehmern zu übertragende Signalgemisch, an Ausgängen anderer Leistungsaddierer die anderen Gruppen von Teilnehmern über andere, entsprechende Übertragungswege zu übertragenden Signalgemische.

Alle diese Signalgemische sind so beschaffen, daß die die Signale enthaltenden Träger Frequenzen haben, die innerhalb einer Oktave liegen. Für das Signalgemisch der Fernsprech- und Datensignale kann dies bedeuten, daß es in ein weit höherfrequentes Band als das Band von 20 - 40 MHz umgesetzt werden muß, bevor es dem Fernseh-Rundfunk-Signalgemisch hinzugefügt wird.

Eine Übertragung einer Vielzahl von Fernsehsignalen durch Frequenzmodulation verschiedener Träger und durch Intensitätsmodulation eines einzigen optischen Senders durch das Signalgemisch ist bekannt aus "Electronics Letters", 22nd October 1987, VOL. 23, No. 22, S. 1196 bis 1197. Die Übertragung von Fernsprech- oder ISDN-Signalen ist dort nicht erwähnt.

Anhand von Fig. 5 wird nun beschrieben, wie das bei einem Teilnehmer empfangene Signalgemisch wieder in die normgerechte Frequenzlage rückumgsetzt wird. Nachdem in dem hier nicht gezeigten Filter 122 aus Fig. 1 die Fernsprech- und ISDN-Signale vom empfangenen Signalgemisch abgetrennt worden sind, wird das restliche, die Fernseh- und Rundfunksignale enthaltende Signalgemisch einer Anordnung von FM-Demodulatoren FD₁ bis FD₃₅ und FDᵣ zugeführt, wobei die FM-Demodulatoren FD₁ bis FD₃₅ die Fernseh-Signale wieder in die Basisbandlage umsetzen. Die Basisbandsignale werden anschließend in Amplitudenmodulatoren AM₁ bis AM₃₅ der heute für das Kabelfernsehen gültigen Norm entsprechend verschiedenen Trägern mittels Restseitenband-Amplitudenmodulation aufmoduliert. Ein FM-Demodulator FDᵣ demoduliert den das UKW-Band enthaltenden Träger und ein nachgeschalteter Umsetzer 401 setzt das dabei erhaltene Signalgemisch in die Normallage des UKW-Bandes um. Die so erhaltenen Signale TV₁ bis TV₃₅ und das UKW-Band werden in einem Leistungsaddierer 400 zum normgerechten Kabelfernseh-Signalgemisch zusammengefaßt.

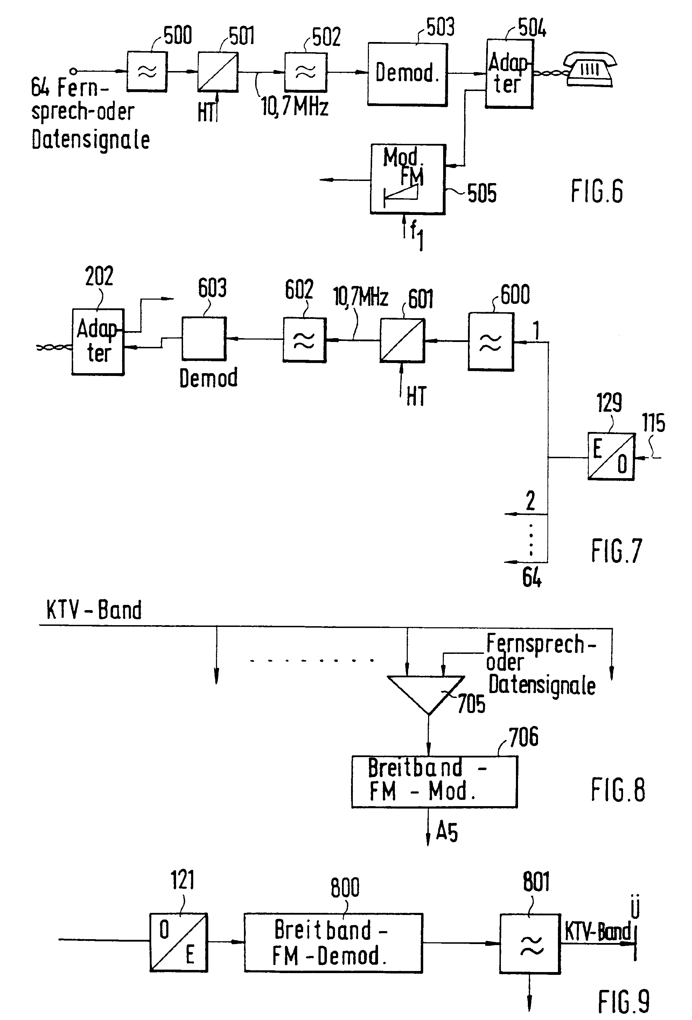

Anhand von Fig. 6 wird nun die Verarbeitung der vom Gesamt-Signalgemisch abgetrennten Fernsprech- und Datensignale erläutert. Das diese Signale enthaltende Frequenzband von 20 bis 40 MHz wird in einem Vorfilter 500, das auf die dem betrachteten Teilnehmeranschluß individuell zugeordnete Frequenz abgestimmt ist, vorgefiltert und dadurch der gewünschte Träger aus dem Gemisch von modulierten Trägern herausgetrennt, was jedoch nur unvollständig geschieht, d.h. die anderen Träger sind im Ausgangssignal noch enthalten, wenn auch mit geringerer Amplitude. In einem Zwischenfrequenz-Umsetzer 501 wird dieses Signal mit einem Hilfsträger HT gemischt, dessen Frequenz so gewählt ist, daß der gewünschte Träger auf eine für alle Träger einheitliche Zwischenfrequenz von vorzugsweise 10,7 MHz umgesetzt wird. Ein nachgeschaltetes Zwischenfrequenz-Filter 502, das auf diese Zwischenfrequenz abgestimmt ist, isoliert praktisch die auf diese Frequenz umgesetzte Nutzinformation von den anderen störenden Trägern. Nach der Demodulation in einem Demodulator 503 liegt schließlich das Fernsprech- oder Datensignal im usprünglichen Basisband vor.

Als Demodulator 503 wird, wenn es sich um einen Fernsprechanschluß handelt, ein FM-Demodulator, und wenn es sich um einen ISDN-Anschluß handelt, ein PSK- oder FSK-Demodulator verwendet.

Die Umsetzung auf die Zwischenfrequenz 10,7 MHz, anschließende Filterung und FM-Demodulation entspricht der Signalverarbeitung in heutzutage üblichen UKW-Rundfunkempfängern und hat daher den Vorteil, daß kostengünstige und erprobte Schaltungen eingesetzt werden können. Ein weiterer Vorteil liegt darin, daß für alle Teilnehmeranschlüsse einheitliche Demodulatoren, einheitliche Zwischenfrequenzfilter und, abgesehen von der Frequenz des Hilfsträgers, einheitliche Zwischenfrequenz-Umsetzer verwendbar sind.

Das am Ausgang des Demodulators 503 erscheinende Fernsprech- oder ISDN-Signal wird schließlich in einem Adapter 504, dessen Funktion bereits im Zusammenhang mit Fig. 3 erläutert wurde, so umgesetzt, daß das für die Teilnehmereinrichtung (Fernsprechapparat oder ISDN-Einrichtung) normgerechte Signal wieder hergestellt wird.

Die von dieser Teilnehmereinrichtung zur Zentrale zu sendenden Signale setzt der Adapter 504 und ein diesem nachgeschalteter Modulator 505, der für ein analoges Fernsprechsignal ein FM-Modulator und für ein Datensignal ein Phasenumtast- oder Frequenzumtast-Modulator ist, so um, daß ein modulierter Träger mit einer der Teilnehmereinrichtung innerhalb einer Gruppe von Teilnehmern individuell zugeordneten Frequenz f₁ entsteht. Dieser modulierte Träger wird dann im einfachsten Falle direkt auf den in Fig. 1 gezeigten Elektrisch-optisch-Wandler 127 des Teilnehmers gegeben oder, falls der Teilnehmer mehrere Endgeräte hat, über einen Multiplexer 126, so daß im letzteren Falle der im Wandler 127 bekanntlich vorhandene Laser durch ein Signalgemisch aus mehreren modulierten Trägern in seiner Lichtintensität moduliert wird.

Die in Fig. 3 und Fig. 6 gezeigten Modulatoren und Demodulatoren können umschaltbar sein, damit sie entweder Fernsprechsignale durch Frequenzmodulation oder Datensignale durch Frequenz- oder Phasenumtastmodulation verarbeiten können.

In Fig. 7 ist der Demodulator-Teil des Modulators/Demodulators 119 aus Fig. 1 gezeigt. Das über den in Fig. 1 gezeigten Lichtwellenleiter 115 oder über den in Fig. 2 gezeigten Lichtwellenleiter 112 empfangene optische Signal, das in dem Optisch-Elektrisch-Wandler 129 in ein elektrisches Signal umgesetzt wird, wird in dem zu beschreibenden Demodulator auf m (z.B. m = 64) Leitungen verteilt, da es bis zu m Fernsprech- oder Datensignale enthält. Dieses Signalgemisch gelangt auf verschiedene Demodulationswege, von denen ein einziger gezeigt ist. Dort erfolgt mit Hilfe eines Vorfilters 600, eines Zwischenfrequenz-Umsetzers 601, eines Zwischenfrequenz-Filters 602 und eines Demodulators 603 eine Demodulation, wie sie anhand der entsprechend bezeichneten Baugruppen im Zusammenhang mit Fig. 5 bereits erläutert ist. Das am Ausgang des Demodulators 603 erscheinende Fernsprech- oder Datensignal wird schließlich in einem Adapter 202, dessen Funktion bereits im Zusammenhang mit Fig. 3 erläutert wurde, so umgesetzt, daß es auf die zur Ortsvermittlungsstelle führende Zweidraht-Leitung gegeben werden kann.

Entsprechend einem zweiten Verfahren - genannt Gesamtband-FM - wird nun anhand der Figuren 8 und 9 ein zweites Ausführungsbeispiel der Modulations- und Multiplexeinrichtung 117 aus Fig 1 und der entsprechenden teilnehmerseitigen Einrichtungen erläutert. Das die Fernseh- und UKW-Rundfunkprogramme enthaltende Signalgemisch in der Form, wie es heutzutage in das Kabelfernsehnetz der Deutschen Bundespost eingespeist wird, auch als "KTV-Band" bezeichnet, wird gemäß Fig. 8 auf beispielsweise 10 Leitungen verteilt, wenn zehn Teilnehmergruppen, wie sie in Fig. 1 gezeigt sind, von der Zentrale aus versorgt werden sollen. Für jeweils eine Leitung ist ein Leistungsaddierer vorhanden, der dem Signalgemisch noch ein Signalgemisch aus m Fernsprech- oder Datensignalen, das, wie in Fig. 3 gezeigt, aufbereitet wird, hinzufügt. Die m Fernsprech- oder Datensignale liegen, wie oben erwähnt, in einem Frequenzbereich von 20 bis 40 MHz, der durch das KTV-Band nicht belegt ist. Am Ausgang jedes der Leistungsaddierer, von denen nur einer, mit 705 bezeichnet, gezeigt ist, erscheint also ein Signalgemisch, das die Fernseh- und UKW-Rundfunkprogramme und die zu einer Gruppe von Teilnehmern zu übertragenden Fernsprech- oder ISDN-Signale enthält. Jedes dieser Signalgemische hat eine Bandbreite von 20 bis 450 MHz.

Für jedes der Signalgemische ist ein Breitband-FM-Modulator 706 vorhanden, der einen Träger einer Frequenz von beispielsweise 5,0 GHz mit dem Breitbandsignalgemisch frequenzmoduliert, wobei der Frequenzhub etwa 1,5 GHz beträgt. Die Ausgänge dieser Breitband-FM-Modulatoren sind die Ausgänge des in Fig. 1 gezeigten Modulators 117, und beispielsweise am Ausgang A5 erscheint derjenige frequenzmodulierte Träger, der neben den Fernseh- und UKW-Rundfunkprogrammen die für die in Fig. 1 gezeigte Teilnehmergruppe bestimmten Fernsprech- oder ISDN-Signale enthält. Dieser frequenzmodulierte Träger, der eine Bandbreite von z.B. 3,5 bis 6,5 GHz hat, moduliert nun den in Fig. 1 oder in Fig. 2 gezeigten Elektrisch-optisch-Wandler 120 in seiner Lichtintensität.

Wie in Fig. 9 gezeigt, wird beim Teilnehmer das von dem Optisch-elektrisch-Wandler 121 gelieferte Signalgemisch in einem Breitband-FM-Demodulator 800 demoduliert, und in einem Filter 801 wird das die Fernsprech- oder ISDN-Signale enthaltende Signalgemisch aus dem Gesamt-Signalgemisch herausgetrennt, so daß das KTV-Band zum Übergabepunkt Ü des Teilnehmers in der normgerechten Form gelangt.

Entsprechend einem dritten Verfahren - genannt "AM-IM" - gibt es ein drittes Ausführungsbeispiel der Modulations- und Multiplexeinrichtung 117 und der zugehörigen teilnehmerseitigen Einrichtungen. Es unterscheidet sich von dem nach den Fig. 8 und 9 dadurch, daß die Breitband-FM-Modulatoren und die Breitband-FM-Demodulatoren entfallen. Hierbei wird also das KTV-Band, nachdem in Leistungsaddierern das die m Fernsprech- oder Datensignale enthaltende Signalgemisch hinzugefügt ist, ohne weitere Umsetzung direkt dem Elektrisch-optisch-Wandler zugeführt und damit die Intensität des von diesem ausgesendeten Lichts moduliert. Das Modulationssignal ist also in diesem Falle ein Signalgemisch mit einer Bandbreite von 20 bis 450 MHz, das amplitudenmodulierte Träger für die Fernsehprogramme, frequenzmodulierte Träger für die UKW-Rundfunkprogramme und frequenz- oder phasenmodulierte Träger für die Fernsprech- oder Datensignale enthält.

Im folgenden werden noch einige Modifikationen und Ergänzungen des in Fig. 1 gezeigten Systems erläutert.

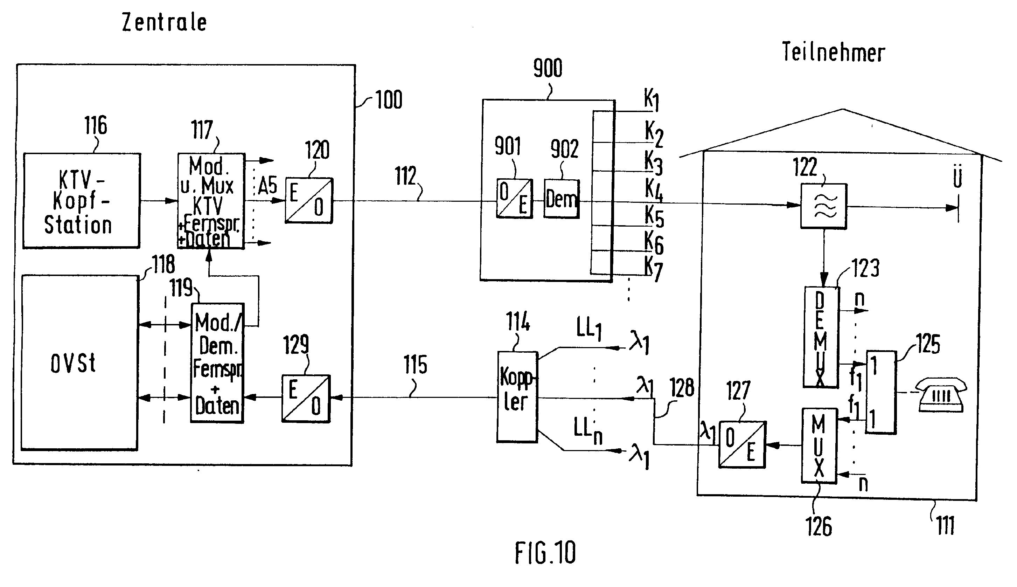

Fig. 10 zeigt eine Modifikation, die die Übertragung in Abwärtsrichtung von der Zentrale zu den Teilnehmern der Gruppe betrifft. Statt des in Fig. 1 vorhandenen Kopplers 113, der das zu der Gruppe von Teilnehmern zu sendende optische Signal auf teilnehmerindividuelle Lichtwellenleiter L₁ bis Lₖ (Fig. 1) verteilt, ist bei der in Fig. 10 gezeigten Modifikation vorgesehen, in einer Vorfeldeinrichtung 900 das optische Signal in ein elektrisches umzusetzen, in ein normgerechtes Signal (abgesehen von den darin enthaltenen Fernsprech- oder Datensignalen) umzusetzen und dieses über elektrische Leitungen, z.B. Koaxialleitungen, zu den Teilnehmern zu verteilen. Hierzu enthält die Vorfeldeinrichtung 900 einen Optisch-elektrisch-Wandler 901, einen diesem nachgeschalteten Demodulator 902, der das elektrische Frequenzmultiplexsignal in die ursprüngliche von der KTV-Kopfstation erzeugte Standard-Form demoduliert (abgesehen von den darin enthaltenen Fernsprech- und Datensignalen), d.h. die Funktion des in Fig. 5 gezeigten Demodulators oder die Funktion des Breitband-FM-Demodulators 800 aus Fig. 9 hat. Bei einer Amplitudenmodulation-Intensitätsmodulation würde der Demodulator 902 entfallen. Nach der Demodulation wird das Signal auf eine der Anzahl der Teilnehmer der Gruppe entsprechende Anzahl von Koaxialleitungen K₁ bis K₇ verteilt, die es bis zu den Teilnehmern der Gruppe übertragen. In Fig. 9 ist gezeigt, daß eine Koaxialleitung K₄ zu dem Teilnehmer 111 führt. Dort werden in einer Frequenzweiche 122 lediglich die Fernsprech- oder Datensignal aus dem Frequenzmultiplexsignal herausgefiltert, d.h. eine Verarbeitung des eigentlichen KTV-Signals findet beim Teilnehmer nicht statt, sondern wird für alle Teilnehmer der Gruppe in einer einzigen Vorfeldeinrichtung 900 durchgeführt. Im übrigen unterscheidet sich die Modifikation nach Fig. 10 nicht von dem System nach Fig. 1, so daß eine weitere Erläuterung nicht erforderlich ist.

Selbstverständlich kann sich die Vorfeldeinrichtung 900 z.B. im Keller eines Mehrfamilienhauses befinden.

Eine Ergänzung bezieht sich auf die Wahl der Frequenzen für die Übertragung der Fernsprech- oder Datensignale, und zwar sowohl in der Abwärts-, als auch in der Aufwärtsrichtung. Als Fernsprech- oder Datensignale kommen die oben erläuterten verschiedenen Signale in Frage. Wie oben erwähnt, sollen die Träger zur Übertragung dieser Signale in dem im Frequenzband von 20 MHz bis 40 MHz liegen. Die zur Übertragung der analogen Fernsprechsignale und der Digitalsignale mit Bitfolgefrequenzen von 64 bis 144 kbit/s verwendeten Trägerfrequenzen haben zweckmäßigerweise ein einheitliches Kanalraster, d.h. einen Nachbarabstand der Trägerfrequenzen, von 300 kHz. Hierdurch können zur Übertragung der Analogsignale durch die Frequenzmodulation erprobte Schaltungen aus der UKW-Rundfunktechnik verwendet werden. Die Trägerfrequenzen zur übertragung der digitalen Daten mit 2Mbit/s werden zweckmäßigerweise in den oberen Bereich des Frequenzbandes von 20 MHz bis 40 MHz gelegt, z.B. eine Trägerfrequenz zur Übertragung solcher Daten bei 38 MHz, wobei die Modulation zur Übertragung des 2 Mbit/s-Digitalsignals eine Bandbreite von 1 bis 2 MHz und damit einen Abstand zu benachbarten Trägerfrequenzen von 1 bis 2 MHz erfordert.

Eine weitere Ergänzung betrifft die im System verwendeten Elektrisch-optisch-Wandler. Sind die Kennlinien dieser Wandler nicht hinreichend linear, so bilden sich Mischprodukte mit Frequenzen, die in das Übertragungsband fallen und dort sehr störend wirken können. Diese Störungen sind umso gravierender, je breiter das Frequenzspektrum des Eingangssignals ist. Um die Linearität der Elektrisch-optisch-Wandler zu verbessern, wird jeder dieser Wandler mit einer Schaltung zur Linearisierung ausgestattet, wobei die Linearisierung durch eine negative Rückkopplung des ausgesendeten optischen Signals etwa derart, wie sie z.B. aus der US-PS 3 996 526 bekannt ist, erfolgt.

Eine weitere Modifikation betrifft die Übertragung des eine Vielzahl von modulierten Trägern enthaltenden Frequenzbandes als optisches Signal. In den oben erläuterten Ausführungsbeispielen der Modulations- und Multiplex-Einrichtung 117 (Fig. 1) ist vorgesehen, daß ein einziger Elektrisch-optisch-Wandler 120 als Eingangssignal ein Frequenzmultiplex-Signal erhält, das eine Vielzahl von modulierten Trägern enthält. Dieses besteht entweder aus einer Vielzahl von frequenzmodulierten Trägern und wird wie anhand von Fig. 4 erläutert aufbereitet, oder es ist einfach das normgerechte KTV-Band, in dessen freien Frequenzbereich die Fernsprech- und Datensignale integriert sind, was ebenfalls oben erläutert ist. In jedem dieser beiden Fälle ist das Eingangssignal des Elektrisch-optisch-Wandlers 120 (Fig. 1) ein breitbandiges Signalgemisch, das viele modulierte Träger enthält.

Problematisch bei dieser Art der Übertragung ist das Rauschen des Systems, d.h. bei vielen gleichzeitig über einen optischen Sender zu übertragenden Trägern kann der Geräuschabstand in jedem der einzelnen Fernsehkanäle zu klein werden. Das liegt u.a. daran, daß das Signalgemisch aus den vielen Trägern nur einen sehr kleinen Modulationsgrad des im Elektrisch-optisch-Wandler verwendeten Lasers gestattet, damit der Laser nicht übersteuert wird. Für ein Gemisch aus ca. 35 mit Fernsehsignalen modulierten Trägern und ca. 30 mit UKW-Rundfunksignalen modulierten Trägern kann man nur einen geringen Modulationsgrad zulassen, z.B. 1,5 % pro Fernsehsignal-Träger. Erhöht man den Modulationsgrad beim Laser, so kommt das Eingangssignal auf zu hohe Spitzenwerte, die den Laser übersteuern. Interferenzen zwischen den Nutzsignalen bilden dann Störprodukte, die die Qualität der Fernsehsignale stark herabsetzen.

Gemäß einer vorteilhaften Ausgestaltung der Erfindung ist daher vorgesehen, das insgesamt zu übertragende Frequenzband in mehrere Teilbänder, von denen jedes nur einen Teil der insgesamt zu übertragenden modulierten Träger enthält, aufzuteilen, jedes Teilband in einem eigenen Elektrisch-optisch-Wandler in ein optischses Signal umzusetzen, wobei für alle optischen Signale eine einheitliche Wellenlänge verwendet wird, und diese optischen Signale in den zwischen der Zentrale und der Gruppe von Teilnehmern verlaufenden Lichtwellenleiter 112 (Fig. 1) einzukoppeln.

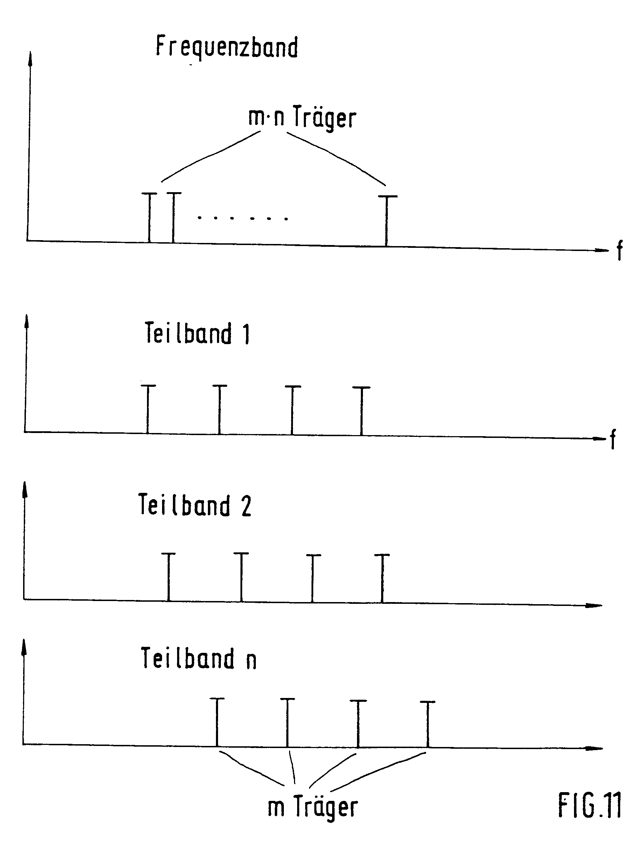

In Fig. 11 ist gezeigt, wie das zu übertragende Frequenzband in die Teilbänder aufgeteilt wird. Ein Frequenzband mit einer Vielzahl von Trägern wird in n Teilbänder so unterteilt, daß jeweils eine Gruppe von m Trägern in einem der Teilbänder enthalten ist und dadurch insgesamt die Vielzahl m X n Träger des ursprünglich vorliegenden Frequenzbandes wie in Fig. 11 gezeigt auf die verschiedenen Teilbänder aufgeteilt ist. Die Teilbänder können also jeweils das ganze Spektrum des ursprünglichen Übertragungsbandes haben. Sie enthalten jedoch eine deutlich geringere Anzahl von Trägern als das ursprüngliche Frequenzband.

In Fig. 12 ist gezeigt, daß jedes der n Teilbänder auf einen eigenen Elektrisch-optisch-Wandler W₁ bis Wₙ gegeben wird und daß deren Ausgangssignale mittels eines Sternkopplers SK zu einem optischen Summensignal zusammengefaßt und in den zur Gruppe von Teilnehmern führenden Lichtwellenleiter 112 (Fig. 1) eingekoppelt werden. Hierbei kann nun jeder Elektrisch-optisch-Wandler, genauer gesagt der in ihm enthaltene Laser, optimal im Hinblick auf Intermodulationsverzerrungen einerseits und Rauschen andererseits ausgesteuert werden. Dabei liegt wegen der geringeren Anzahl der Träger der Modulationsgrad je Laser deutlich höher, so daß für jedes Trägersignal der Geräuschabstand deutlich besser ist.

Die Wellenlänge der Wandler W₁ bis Wₙ wird vorzugsweise als eine einheitliche Wellenlänge, z.B. ca. 1300 nm gewählt. Empfangsseitig wird das übertragene optische Summensignal wie in Fig. 1 gezeigt mit einem einzigen optischen Empfänger 121 in ein elektrisches Signal umgesetzt, das alle ursprünglichen Träger enthält, jedoch mit einer weit besseren Signalqualität als bei der Übertragung nach Fig. 1.

Zu diesem Übertragungsverfahren ist zu bemerken, daß die Aufteilung eines breitbandigen Frequenzmultiplex-Signals in Teilbänder und die getrennte Umsetzung der Teilbänder in optische Signale bekannt ist aus der DE-A1 32 03 785. Dort werden allerdings optische Signale mit verschiedenen Wellenlängen erzeugt und über einen einzigen Lichtwellenleiter übertragen. Andererseits ist es aus der DE-A1 32 39 593 bekannt, mehrere nicht überlappende Frequenzbänder mit jeweils einem Elektrisch-optisch Wandler in optische Signale mit einer einheitlichen Wellenlänge umzusetzen, diese mit einem Sternkoppler zusammenzufassen und über einen einzigen Lichtwellenleiter zu übertragen.

Hinsichtlich der Wahl der Wellenlängen ist es auch möglich, für die Fernsehsignale eine andere Wellenlänge als für die Fernsprech- und Datensignale zu wählen, also die verschiedenen Arten von Signalen im Wellenlängenmultiplex zu übertragen, was bedeutet, daß empfangsseitig ein optischer Empfänger für die Fernsehsignale und ein optischer Empfänger für die Fernsprech- und Datensignale vorzusehen ist. Eine geeignete Wellenlänge für die Fernsprech- und Datensignale ist ca. 800 nm.

Die vorstehend beschriebene parallele Verwendung mehrerer Laser hat als weiteren Vorteil einen höheren Lichtpegel am Ausgang des Sternkopplers zur Folge, was die Überbrückung einer größeren optischen Streckendämpfung oder die Verteilung der optischen Signale mittels optischer Sternkoppler auf mehrere Teilnehmer erleichtert.

Nachstehend wird eine Ergänzung beschrieben, die die Sicherheit der Systembenutzer im Falle eines Bruchs der Lichtwellenleiter betrifft. Da in dem System vorzugsweise Laser als optische Sendeelemente verwendet werden, besteht die Notwendigkeit, bei bestimmten Störungen, z.B. wenn ein Bagger ein Lichtwellenleiterkabel zerreißt, die Laser an den Enden der Übertragungsstrecke abzuschalten, um das Risiko von Augen-Unfällen und den damit verbundenen Folgeschäden zu vermeiden.

Bei dem optischen Übertragungssystem gemäß der vorliegenden Erfindung ist es erforderlich, mit einer hohen optischen Sendeleistung (mehr als -6 dBm) zu arbeiten, um bestimmte systemtechnische Eigenschaften zu erreichen wie z.B. die Überbrückung einer Mindestdistanz zwischen der Zentrale und den Teilnehmern oder die Einhaltung eines bestimmten Geräuschabstandes. Ein Rückkanal ist nicht vorhanden, so daß ein Alarmsignal von der Teilnehmerseite nicht ohne weiteres zur sendenden Zentrale gegeben werden kann, um dort den Laser abzuschalten. Das Rücksenden eines Alarmsignals ist besonders deshalb nicht möglich, wenn das Kabel defekt ist, da jeder Teilnehmer nur über ein einziges Kabel oder eine einzige Faser mit der Zentrale verbunden ist.

Erfindungsgemäß kann daher eine der nachfolgend zu beschreibenden Schutzeinrichtungen vorhanden sein.

In Fig. 13 ist eine Schutzeinrichtung gezeigt, die eine optische oder elektrische Schleife zur Überwachung einer Lichtwellenleiter-Strecke vorsieht. Soll ein Faserbruch auf einer Lichtwellenleiter-Strecke zwischen zwei Punkten A und B, beispielsweise, wie in Fig. 13 gezeigt, zwischen der Zentrale 100 und dem Koppler 113 überwacht werden, so geschieht dies mit einer optischen oder elektrischen Schleife 181, die in unmittelbarer Nähe zur zu überwachenden Lichtwellenleiter-Strecke verläuft. Von einem Überwachungsgerät 180 verläuft z.B. ein Kupferdraht entlang dem Lichtwellenleiter 112 bis zum Koppler 113 und von dort wieder zurück zum Überwachungsgerüt. Über diese Schleife sendet das Überwachungsgerüt einen Strom, der im ungestörten Betriebszustand ständig fließt. Wenn das Kabel zerrissen wird, wird auch die Schleife unterbrochen, so daß das Überwachungsgerät die Abschaltung des im Elektrisch-optisch-Wandler 120 vorhandenen Lasers veranlaßt.

Es ist auch möglich, die Fernspeiseleitung in diesem Sinne zur Kabelbruch-Überwachung mitzuverwenden. Die Kupferdrähte können entweder in den Beipack des optischen Kabels eingelassen sein, oder es kann ein dünnes Kupferkabel parallel zur Lichtwellenleiterkabel verlegt werden.

Statt der Kupferdrähte können auch Lichtwellenleiter verwendet werden, die Bestandteil des den Übertragungs-Lichtwellenleiter enthaltenden optischen Kabels sind. In diesem Falle werden sie in der Nähe des Kopplers zusammengespleißt, und ein Faserbruch wird daran festgestellt, daß der Lichtweg über diese optische Schleife von der Zentrale zum Koppler und zurück unterbrochen wird.

Im Falle einer elektrischen Schleife in Form von Kupferdrähten und, falls auf der Übertragungsstrecke optische Stecker vorhanden sind, können diese so konstruiert werden, daß beim Zusammenstecken der Steckerhälften die elektrische Schleife geschlossen wird.

In Fig. 14 ist eine Schutzeinrichtung gezeigt, bei der zwischen dem Elektrisch-optisch-Wandler 120 für das zu sendende Signal und dem Faserkabel ein optischer Koppler 183 eingespleißt ist und das zu sendende optische Signal über diesen Koppler in den Übertragungs-Lichtwellenleiter 112 eingekoppelt wird. Die aus diesem reflektierten und rückgestreuten optischen Signale werden an einem Ende des Kopplers 183 mit einem Optisch-elektrisch-Wandler 181 detektiert. Ein das elektrische Ausgangssignal des Wandlers 181 auswertender Überwachungs-Schaltkreis 182 veranlaßt die Abschaltung des im Elektrisch-optisch-Wandler 120 enthaltenen Lasers, wenn das detektierte Licht einen vorgegebenen Schwellenwert überschreitet. Dem liegt zugrunde, daß ein zu hoher Pegel des reflektierten Lichts auf einen Bruch des Lichtwellenleiters hindeutet.

Gemäß einer Weiterbildung der in Fig. 14 gezeigten Schutzeinrichtung ist es möglich, auch am noch freien Ende des Kopplers 183 einen Optisch-elektrisch-Wandler vorzusehen. Dieser detektiert dann einen Teil des vom Elektrisch-optisch-Wandler ausgesendeten Lichts und liefert ein elektrisches Ausgangssignal, das einerseits zur elektrischen Gegenkopplung des Lasers verwendbar ist, um damit die Laserkennlinie zu linearisieren und dessen niederfrequenter Anteil zur Arbeitspunkteinstellung des Lasers verwendbar ist.

Es ist darauf hinzuweisen, daß die vorstehend beschriebenen Schutzeinrichtungen nicht nur im Zusammenhang mit dem erfindungsgemäßen System verwendbar sondern als eigenständige Lösungen betrachtet werden können, wenn immer es darum geht, eine zwischen zwei Punkten A und B bestehende optische Übertragungsstrecke hinsichtlich einer Streckenunterbrechung zu überwachen.

Schließlich wird noch eine Modifikation beschrieben, die die Übertragung der Fernsprech- und Datensignale in den beiden Richtungen zwischen der Zentrale und den Teilnehmern betrifft. Im vorstehenden ist beschrieben, daß die Übertragung dieser Signale im Frequenzmultiplex mit teilnehmerindividuellen Trägerfrequenzen stattfindet.

Stattdessen können die Signale auch im Zeitmultiplex oder auch im Codemultiplex übertragen werden.

Wird zur Übertragung von der Zentrale zu den Teilnehmern das Zeitmultiplex-Verfahren angewendet, so werden in der Zentrale die zu einer Gruppe von Teilnehmern zu übertragenden Signale zu einem digitalen Zeitmultiplex-Signal mit einer Bitfolgefrequenz von z.B. etwa 8 Mbit/s zusammengefaßt, und dieses Summensignal wird in der Modulations- und Multiplexeinrichtung 117 (Fig. 1) dem KTV-Band hinzugefügt, wobei es gegebenenfalls auch einem Träger aufmoduliert wird und/oder durch Codierung mit einem Leitungscode auf ein geeignetes Frequenzband beschränkt wird. Analoge Fernsprechsignale werden vor der Zeitmultiplex-Zusammenfassung in digitale Signale umgesetzt. Bei jedem Teilnehmer wird mittels der Frequenzweiche 122 dieses Zeitmultiplex-Signal dem Gesamt-Signalgemisch entnommen, und jeder Teilnehmer hat Demultiplexeinrichtungen, die die für ihn bestimmten Signale entnehmen.

Falls zur Übertragung der Fernsprech- und Datensignale von der Zentrale zu den Teilnehmern das Codemultiplex-Verfahren angewendet wird, werden die digitalen (oder digitalisierten) Signale für eine Gruppe jeweils mit einem Adresscode multipliziert und in einem Leistungsaddierer zu einem Signalgemisch zusammengefaßt, das in der Modulations- und Multiplexeinrichtung 117 (Fig. 1) zum KTV-Band hinzugefügt wird. Beim Teilnehmer wird dieses Signalgemisch mittels der Frequenzweiche 122 (Fig. 1) dem Gesamtband entnommen, und jeder Teilnehmer hat Demultiplexeinrichtungen, die das für ihn bestimmte Signal entnehmen.

Zur Übertragung der Fernsprech- und Datensignale in der entgegengesetzten Richtung kann ebenfalls das Zeitmultiplex-Verfahren oder das Codemultiplex-Verfahren angewendet werden. Die bei den Teilnehmern vorhandenen Multiplexer sorgen dann dafür, daß die von einer Gruppe von Teilnehmern zur Zentrale zu sendenden Fernsprech- oder Datensignale in teilnehmerindividuell zugeordneten Zeitabschnitten eines (Zeitmultiplex-)Pulsrahmens oder mit teilnehmerindividuell zugeordneten Adresscodes multipliziert in ein optisches Signal mit der Wellenlänge λ₁ umgesetzt werden. Zur Zentrale wird dann ein Gemisch von optischen Signalen übertragen, die sich nicht durch ihre Wellenlängen, sondern durch die Zeitabschnitte, in denen sie ihr Fernsprech- oder Datensignal enthalten, oder durch die Codes des den jeweiligen Elektrisch-optisch-Wandlers 127 (Fig. 1) modulierenden Digitalsignals (oder der Digitalsignale) unterscheiden. Die Zentrale enthält die geeigneten Demultiplexeinrichtungen, um das elektrische Ausgangssignal des Optisch-elektrisch-Wandlers 129 (Fig. 1) in seine Einzel-Signale aufzulösen.

Vorzugsweise wird die Kombination so angewendet, daß die Übertragung in Abwärtsrichtung im Zeitmultiplex-Verfahren und die Übertragung Aufwärtsrichtung im Codemultiplex-Verfahren erfolgt.

## Patentansprüche

1. Optisches Nachrichtenübertragungssystem zur doppelt gerichteten Übertragung von teilnehmerindividuellen Nachrichtensignalen, insbesondere Fernsprechsignalen, zwischen einer Zentrale (100) und Teilnehmern (111) und zur Verteilung von Nachrichtensignalen, insbesondere Fernsehsignalen, von der Zentrale zu den Teilnehmern, das so gestaltet ist, daß die Übertragung der an die Teilnehmer zu verteilenden Nachrichtensignale und die Übertragung der teilnehmerindividuellen Nachrichtensignale von der Zentrale zu den Teilnehmern im Frequenzmultiplex über erste Lichtwellenleiter (112) und die Übertragung von teilnehmerindividuellen Nachrichtensignalen von den Teilnehmern zu der Zentrale über zweite Lichtwellenleiter (115) erfolgt,
**dadurch gekennzeichnet**,
- daß die an eine Zentrale (100) angeschlossenen Teilnehmer zu Gruppen zusammengefaßt sind,
- daß Mittel (117, 120) vorhanden sind, um die von der Zentrale (100) zu einer Gruppe von Teilnehmern zu übertragenden Signale in der Zentrale (100) zu einem Frequenzmultiplexsignal mit teilnehmerindividuellen Trägerfrequenzen für teilnehmerindividuelle Signale zusammenzufassen und dieses über einen der Gruppe von Teilnehmern (111) gemeinsamen Lichtwellenleiter (112) in die Nähe dieser Teilnehmer (111) zu übertragen,
- daß optische Mittel (113) und teilnehmerindividuelle Lichtwellenleiter (L1-Lk) vorhanden sind, um dieses optische Signal zu den Teilnehmern (111) zu verteilen,
- daß bei jedem Teilnehmer Einrichtungen (121, 122, 123) vorhanden sind, die das empfangene optische Signal in ein elektrisches umsetzen und das für ihn bestimmte Signal aus den teilnehmerindividuellen Signalen entnehmen,
- daß bei den Teilnehmern (111) der Gruppe Einrichtungen (126) vorhanden sind, um die zur Zentrale (100) zu übertragenden Signale Trägern mit teilnehmerindividuellen Trägerfrequenzen aufzumodulieren,
- daß bei den Teilnehmern weitere Einrichtungen vorhanden sind, um die modulierten Träger in optische Signale mit annähernd gleichen Wellenlängen (λ₁) zu setzen und diese über teilnehmerindividuelle Lichtwellenleiter (LL₁ - LLₙ) zu einem gemeinsamen Lichtwellenleiter (115) zu übertragen, daß dort optische Mittel (114, 113) vorhanden sind, um die übertragenen optischen Signale in den gemeinsamen Lichtwellenleiter (115, 112) einzukoppeln und über diesen zur Zentrale (110) zu übertragen, und
- daß in der Zentrale (100) Einrichtungen (129, 119) vorhanden sind, die das empfangene Gemisch von optischen Signalen in ein Gemisch von elektrischen Signalen umsetzen und dieses demodulieren.

2. System nach Anspruch 1, dadurch gekennzeichnet, daß zur Übertragung der optischen Signale in beiden Richtungen ein einziger der Gruppe von Teilnehmern (111) gemeinsamer Lichtwellenleiter (112) und für jeden Teilnehmer ein einziger teilnehmerindividueller Lichtwellenleiter (L₁ bis Lₖ) verwendet wird, wobei die Übertragung in der einen Richtung mit einer ersten Wellenlänge (λ₀) und in der anderen Richtung mit einer zweiten Wellenlänge (λ₁) erfolgt (Fig. 2).

3. System nach Anspruch 1 oder 2 mit den folgenden weiteren Merkmalen:
a) Zur Aufbereitung des von der Zentrale (100) zu einer Gruppe von Teilnehmern zu übertragenden Frequenzmultiplexsignals enthält die Zentrale (100):
- Modulationseinrichtungen (M₁-M₃₅, Mᵣ), die die an die Teilnehmer zu verteilenden Nachrichtensignale unterschiedlichen Trägern durch Frequenzmodulation aufmodulieren,
- Modulationseinrichtungen (203, 205), die die an die Teilnehmer zu übertragenden teilnehmerindividuellen Nachrichtensignale unterschiedlichen Trägern mit teilnehmerindividuellen Trägerfrequenzen aufmodulieren, und
- Multiplexeinrichtungen (206, 207, 208, 210, 301, 305), die die modulierten Träger zu dem Frequenzmultiplexsignal zusammenfassen (Fig. 3, Fig.4);
b) die Zentrale enthält einen Elektrisch-optisch-Wandler (120), der das Frequenzmultiplexsignal durch Intensitätsmodulation des erzeugten Lichts in ein optisches Signal umsetzt;
c) beim Teilnehmer (111) sind Demodulatoren (FD₁-FD₃₅, 500, 501, 502, 503) vorhanden, die aus dem Frequenzmultiplexsignal die zu verteilenden Nachrichtensignale und die für den Teilnehmer bestimmten teilnehmerindividuellen Nachrichtensignale wiedergewinnen, und Umsetzeinrichtungen (AM₁-AM₃₅, 504), welche die wiedergewonnenen Nachrichtensignale in die ursprüngliche Form umsetzen (Fig.5, Fig. 6).

4. System nach Anspruch 1 oder 2 mit dem folgenden weiteren Merkmal:
Zur Aufbereitung des von der Zentrale (100) zu einer Gruppe von Teilnehmern zu übertragenden Frequenzmultiplexsignals enthält die Zentrale (100):
- Modulationseinrichtungen (203, 205), die die an die zu einer Gruppe gehörenden Teilnehmer zu übertragenden teilnehmerindividuellen Nachrichtensignale unterschiedlichen Trägern mit teilnehmerindividuellen Trägerfrequenzen aufmodulieren, und
- eine Multiplexeinrichtung (705), die diese modulierten Träger mit einem Signalgemisch, das eine Vielzahl von mit den zu verteilenden Nachrichtensignalen amplitudenmodulierten Trägern enthält, zu einem Gesamt-Signalgemisch zusammenfaßt (Fig. 8).

5. System nach Anspruch 4, mit den weiteren Merkmalen:
- die Zentrale enthält einen breitbandigen Frequenzmodulator (706), der das Gesamt-Signalgemisch einem Träger durch Frequenzmodulation aufmoduliert,
- die Zentrale enthält einen Elektrisch-optisch-Wandler (120), der den modulierten Träger durch Intensitätsmodulation des von ihm erzeugten Lichts in ein optisches Signal umsetzt,
- beim Teilnehmer (111) ist ein breitbandiger Frequenzdemodulator (800) vorhanden, der das empfangene Signal frequenzdemoduliert und dadurch das Gesamt-Signalgemisch wiedergewinnt, und es sind dort Demodulatoren (500, 501, 502, 503) vorhanden, die die für den Teilnehmer bestimmten teilnehmerindividuellen Nachrichtensignale wiedergewinnen, und Umsetzer (504), welche die wiedergewonnenen Nachrichtensignale in die ursprüngliche Form umsetzen (Fig. 8, Fig. 9, Fig. 6).

6. System nach Anspruch 4 mit den weiteren Merkmalen:
a) die Zentrale enthält einen Elektrisch-optisch-Wandler (120), der das Gesamt-Signalgemisch durch Intensitätsmodulation des von ihm erzeugten Lichts in ein optisches Signal umsetzt;
b) beim Teilnehmer (111) sind Demodulatoren (500, 501, 502, 503) vorhanden, welche die für den Teilnehmer bestimmten teilnehmerindividuellen Nachrichtensignale wiedergewinnen, und Umsetzer (504), welche die wiedergewonnenen Nachrichtensignale in die ursprüngliche Form umsetzen (Fig. 6).

7. System nach einem der vorstehenden Ansprüche, dadurch gekennzeichnet, daß statt der Verteilung des in die Nähe der Teilnehmer (111) übertragenen optischen Signals mit optischen Mitteln und über teilnehmerindividuelle Lichtwellenleiter eine Umsetzung (901) in ein elektrisches Signal, dessen Demodulation (902) und Verteilung über teilnehmerindividuelle elektrische Leitungen (K₁ bis K₇) zu den Teilnehmern erfolgt (Fig. 10).

8. System nach einem der vorstehenden Ansprüche, dadurch gekennzeichnet, daß die verwendeten Elektrisch-optisch-Wandler (120, 127) Schaltungen zur Linearisierung ihrer Kennlinie enthalten.

9. System nach einem der vorstehenden Ansprüche, ausgenommen Anspruch 5, dadurch gekennzeichnet, daß das Frequenzmultiplexsignal in mehrere Teilbänder aufgeteilt wird, daß für jedes der Teilbänder ein Elektrisch-optisch-Wandler (W₁ bis Wₙ) vorhanden ist, der es in ein optisches Signal umwandelt, und daß die dabei entstehenden optischen Signale in den einzigen Lichtwellenleiter (112) eingekoppelt und über diesen übertragen werden (Fig. 12).

10. System nach einem der vorstehenden Ansprüche, dadurch gekennzeichnet, daß parallel zu einem Lichtwellenleiter (112), über den ein optisches Signal mit hohem Leistungspegel übertragen wird, eine optische oder elektrische Schleife (181) verläuft und daß bei einem in den Lichtwellenleiter sendenden Elektrisch-optisch-Wandler (120) eine Überwachungseinrichtung (180) vorhanden ist, die Licht bzw. einen elektrischen Strom über die Schleife sendet und bei Unterbrechung des Lichtwegs oder Stromwegs den Optisch-elektrisch-Wandler (120) abschaltet (Fig. 13).

11. System nach einem der Ansprüche 1 bis 9, dadurch gekennzeichnet, daß zwischen einem in einen Lichtwellenleiter (112) lichtsendenden Elektrisch-optisch-Wandler (120) und den Lichtwellenleiter (112) ein Koppler (183) eingefügt ist, der im Lichtwellenleiter (112) reflektiertes Licht auskoppelt, daß ein Detektor (181) und eine Überwachungseinrichtung (182) vorhanden sind, die die Abschaltung des Elektrisch-optisch-Wandlers (120) veranlassen, wenn der Pegel des ausgekoppelten reflektierten Lichts einen vorgegebenen Schwellenwert überschreitet (Fig. 14).

12. System nach Anspruch 11, dadurch gekennzeichnet, daß der Koppler (183) auch einen Teil des vom Elektrisch-optisch-Wandler (120) gesendeten Lichts auskoppelt, daß ein Detektor vorhanden ist, der das ausgekoppelte Licht in ein elektrisches Signal umsetzt und daß Schaltungen vorhanden sind, die das elektrische Signal für eine elektrische Gegenkopplung des Elektrisch-optisch-Wandlers verwenden und die aufgrund des niederfrequenten Anteils des elektrischen Signals den Arbeitspunkt des Elektrisch-optisch-Wandlers einstellen.

13. System nach einem der vorstehenden Ansprüche, dadurch gekennzeichnet, daß das in der Zentrale (100) gebildete Multiplexsignal statt eines Frequenzmultiplex-Signals mit teilnehmerindividuellen Trägerfrequenzen für die teilnehmerindividuellen Signale ein Zeitmultiplex-Signal mit teilnehmerindividuellen Pulsrahmen-Zeitabschnitten für die teilnehmerindividuellen Signale ist.

14. System nach einem der Ansprüche 1 bis 12, dadurch gekennzeichnet, daß das in der Zentrale (100) gebildete Multiplexsignal statt eines Frequenzmultiplex-Signals mit teilnehmerindividuellen Trägerfrequenzen für die teilnehmerindividuellen Signale ein Codemultiplex-Summensignal mit teilnehmerindividuellen Codes für die teilnehmerindividuellen Signale ist.

15. System nach einem der vorstehenden Ansprüche, dadurch gekennzeichnet, daß die von den Teilnehmern (111) der Gruppe zur Zentrale zu übertragenden Signale statt Träger mit teilnehmerindividuellen Trägerfrequenzen zu modulieren, in Digitalsignale mit teilnehmerindividuellen Codes umgesetzt werden, die statt der modulierten Träger diesen entsprechend in optische Signale umgesetzt und zur Zentrale übertragen werden.

16. System nach einem der Ansprüche 1 bis 14, dadurch gekennzeichnet, daß die von den Teilnehmern (111) der Gruppe zur Zentrale zu übertragenden Signale, statt Träger mit teilnehmerindividuellen Trägerfrequenzen zu modulieren, in Digitalsignale mit bezogen auf einen Pulsrahmen teilnehmerindividuell zugeordneten aktiven Zeitabschnitten umgesetzt werden, die statt der modulierten Träger diesen entsprechend in optische Signale umgesetzt und zur Zentrale übertragen werden.

## Claims

1. Optical telecommunications system for the bidirectional transmission of individual subscriber communications signals, in particular telephone signals, between a central station (100) and subscribers (111) and for the distribution of communications signals, in particular television signals, from the central station to the subscribers, which system is configured in such a way that the communications signals to be distributed to the subscribers and the individual subscriber communications signals from the central station to the subscribers are transmitted by frequency-division multiplexing via first optical waveguides (112) and individual subscriber communications signals from the subscribers to the central station are transmitted via second optical waveguides (115), characterized
- in that the subscribers linked to a central station (100) are combined to form a group,
- in that means (117, 120) are present for combining, in the central station (100), the signals to be transmitted from the central station (100) to a group of subscribers to form a frequency-division multiplex signal having individual subscriber carrier frequencies for individual subscriber signals and for transmitting said frequency-division multiplex signal via an optical waveguide (112) common to the group of subscribers (111) to the vicinity of said subscribers (111),
- in that optical means (113) and individual subscriber optical waveguides (L₁ - Lₖ) are present for distributing said optical signal to the subscribers (111),
- in that there are present at every subscriber devices (121, 122, 123) which convert the received optical signal into an electrical signal and extract the signal intended for him from the individual subscriber signals,
- in that devices (126) are present at the subscribers (111) for modulating the signals to be transmitted to the central station (100) onto carriers having individual subscriber carrier frequencies,
- in that further devices are present at the subscribers for converting the modulated carriers into optical signals having approximately the same wavelengths (λ₁) and transmitting said signals via individual subscriber optical waveguides (LL₁ - LLₙ) to a common optical waveguide (115), in that optical means (114, 113) are present at the latter for launching the transmitted optical signals into the common optical waveguide (115, 112) and transmitting them via the latter to the central station (110), and
- in that there are present in the central station (100) devices (129, 119) which convert the received mixture of optical signals into a mixture of electrical signals and demodulate the latter.

2. System according to Claim 1, characterized in that, for each subscriber, a single optical waveguide (112) common to the group of subscribers (111) and a single individual subscriber optical waveguide (L₁ to Lₖ) are used to transmit the optical signals in both directions, the transmission in one direction taking place with a first wavelength (λ₀) and in the other direction with a second wavelength (λ₁) (Figure 2).

3. System according to Claim 1 or 2 having the following additional features:
a) to prepare the frequency-division multiplex signal to be transmitted from the central station (100) to a group of subscribers, the central station (100) contains:
- modulating devices (M1 - M35, M_{R}), which modulate the communications signals to be distributed to the subscribers onto various carriers by frequency modulation,
- modulating devices (203, 205) which modulate individual subscriber communications signals to be transmitted to the subscribers onto various carriers having individual subscriber carrier frequencies, and
- multiplexing devices (206, 207, 208, 210, 301, 305) which combine the modulated carriers to form the frequency-division multiplex signal (Figure 3, Figure 4);
b) the central station contains an electrooptical converter (120) which converts the frequency-division multiplex signal into an optical signal by intensity modulation of the light generated;
c) there are present at the subscriber (111) demodulators (FD1 - FD35, 500, 501, 502, 503) which recover the communications signals to be distributed and the individual subscriber communications signals intended for the subscriber from the frequency-division multiplex signal, and conversion devices (AM1 - AM35, 504) which convert the recovered communications signals into the original form (Figure 5, Figure 6).

4. System according to Claim 1 or 2, having the following additional features:
a) to prepare the frequency-division multiplex signal to be transmitted from the central station (100) to a group of subscribers, the central station (100) contains:
- modulating devices (203, 205) which modulate the individual subscriber communications signals to be transmitted to the subscribers belonging to a group onto various carriers having individual subscriber carrier frequencies, and
- a multiplexing device (705) which combines these modulated carriers with a signal mixture containing a multiplicity of carriers amplitude-modulated with the communications signals to be distributed to form a total signal mixture (Figure 8).

5. System according to Claim 4, having the additional features:
- the central station contains a broad-band frequency modulator (706) which modulates the total signal mixture onto a carrier by frequency modulation,
- the central station contains an electrooptical converter (120) which converts the modulated carrier into an optical signal by intensity modulation of the light it generates,
- there is present at the subscriber (111) a broad-band frequency demodulator (800) which frequency-demodulates the received signal and thereby recovers the total signal mixture, and there are demodulators present at that point (500, 501, 502, 503) which recover the individual subscriber communications signals intended for the subscriber, and converters (504) which convert the recovered communications signals into the original form (Figure 8, Figure 9, Figure 6).

6. System according to Claim 4, having the further features:
a) the central station contains an electrooptical converter (120) which converts the total signal mixture into an optical signal by intensity modulation of the light it generates;
b) there are present at the subscriber (111) demodulators (500, 501, 502, 503) which recover the individual subscriber communications signals intended for the subscriber, and converters (504) which convert the recovered communications signals into the original form (Figure 6).

7. System according to one of the preceding claims, characterized in that, instead of the distribution of the optical signal transmitted to the vicinity of the subscriber (111) using optical means and via individual subscriber optical waveguides, a conversion (901) takes place into an electrical signal whose demodulation (902) and distribution takes place via individual subscriber electrical lines (K₁ to K₇) to the subscribers (Figure 10).

8. System according to one of the preceding claims, characterized in that the electrooptical converters (120, 127) used contain circuits for linearizing their characteristic line.

9. System according to one of the preceding claims, excepting Claim 5, characterized in that the frequency-division multiplex signal is partitioned into a plurality of subbands, in that there is present for each of the subbands an electrooptical converter (W₁ to Wₙ) which converts it into an optical signal, and in that the optical signals produced in this process are launched into the single optical waveguide (112) and transmitted via the latter (Figure 12).

10. System according to one of the preceding claims, characterized in that an optical or electrical loop (181) runs parallel to an optical waveguide (112) via which an optical signal is transmitted at high power level and in that there is present at an electrooptical converter (120) transmitting into the optical waveguide a monitoring device (180) which transmits light or an electrical current via the loop and switches off the optoelectrical converter (120) if the light path or current path is interrupted (Figure 13).

11. System according to one of Claims 1 to 9, characterized in that there is inserted between an electrooptical converter (120) transmitting light into an optical waveguide (112) and the optical waveguide (112) a coupler (183) which couples out light reflected in the optical waveguide (112) and in that there are present a detector (181) and a monitoring device (182) which cause the electrooptical converter (120) to switch off if the level of the reflected light coupled out exceeds a given threshold value (Figure 14).

12. System according to Claim 11, characterized in that the coupler (183) also couples out some of the light transmitted by the electrooptical converter (120), in that a detector is present which converts the light coupled out into an electrical signal and in that circuits are present which use the electrical signal for an electrical feedback of the electrooptical converter and which adjust the working point of the electrooptical converter on the basis of the low-frequency component of the electrical signal.

13. System according to one of the preceding claims, characterized in that, instead of a frequency-division multiplex signal having individual subscriber carrier frequencies for the individual subscriber signals, the multiplex signal formed in the central station (100) is a time-division multiplex signal with individual subscriber pulse-frame time segments for the individual subscriber signals.

14. System according to one of Claims 1 to 12, characterized in that, instead of a frequency-division multiplex signal having individual subscriber carrier frequencies for the individual subscriber signals, the multiplex signal formed in the central station (100) is a code-division multiplex composite signal having individual subscriber codes for the individual subscriber signals.

15. System according to one of the preceding claims, characterized in that, instead of modulating carriers with individual subscriber carrier frequencies, the signals to be transmitted from the subscribers (111) in the group to the central station are converted into digital signals having individual subscriber codes which are, converted instead of the modulated carriers, into optical signals in accordance with the latter and transmitted to the central station.

16. System according to one of Claims 1 to 14, characterized in that, instead of modulating carriers with individual subscriber carrier frequencies, the signals to be transmitted from the subscribers (111) in the group to the central station are converted into digital signals having active time segments assigned to a pulse frame in an individual subscriber manner, which are converted, instead of the modulated carriers, into optical signals in accordance with the latter and are transmitted to the central station.

## Revendications

1. Système de transmission optique de l'information pour la transmission dans les deux sens de signaux d'information individuels par abonné, en particulier de signaux de téléphonie, entre un central (100) et des abonnés (111) et pour la distribution de signaux d'information, en particulier des signaux de télévision, du central vers les abonnés, qui est réalisé de façon que la transmission des signaux d'information à distribuer aux abonnés et la transmission des signaux d'information individuels par abonné se fassent du central vers les abonnés par multiplexage par répartition en fréquence par l'intermédiaire de premiers guides d'ondes lumineuses (112), et que la transmission des signaux d'information individuels par abonné se fasse des abonnés vers le central par l'intermédiaire de seconds guides d'ondes lumineuses (115),
caractérisé par le fait
- que les abonnés rattachés à un central (100) sont regroupés en groupes,
- qu'il existe des moyens (117, 120) pour regrouper dans le central (100) les signaux à transmettre du central (100) à un groupe d'abonnés pour donner un signal multiplexé par répartition en fréquence avec des fréquences porteuses individuelles par abonné pour des signaux individuels par abonné et transmettre ce signal multiplexé au voisinage de ces abonnés (111) par l'intermédiaire d'un guide d'ondes lumineuses (12) commun aux groupes d'abonnés (111),
- qu'il existe des moyens optiques (113) et des guides d'ondes lumineuses (L1-Lk) individuels par abonné pour distribuer ce signal optique aux abonnés (11),
- qu'il existe chez chaque abonné des dispositifs (121, 122, 123) qui convertissent le signal optique reçu en un signal électrique et prélèvent dans ces signaux individuels par abonné, le signal qui lui est destiné,
- qu'il existe chez les abonnés (111) du groupe des dispositifs (126) pour moduler les porteuses, à fréquences porteuses individuelles par abonné, avec les signaux à transmettre au central (100), qu'il existe chez les abonnés d'autres dispositifs pour convertir les porteuses, modulées, en signaux optiques de longueurs d'ondes (λ₁) approximativement égales et pour les transmettre, par l'intermédiaire de guides d'ondes lumineuses (LL₁ - LLₙ), individuels par abonné, à un guide d'ondes lumineuses (115) commun, qu'il y existe des moyens optiques (114, 113) pour coupler les signaux optiques, transmis, dans le guide d'ondes lumineuses (115, 112) commun et les transmettre au central (100) par l'intermédiaire de ce guide et
- qu'il existe dans le central (100) des dispositifs (129, 119) qui convertissent le mélange, reçu, de signaux optiques en un mélange de signaux électriques et le démodulent.

2. Système selon la revendication 1, caractérisé par le fait que pour transmettre les signaux optiques dans les deux sens on emploie un unique guide d'ondes lumineuses (112) commun au groupe d'abonnés (111) et, pour chaque abonné, un unique guide d'ondes lumineuses (L₁ à Kₖ) individuels par abonné, la transmission se faisant dans l'un des sens avec une première longueur d'onde (λ0) et dans l'autre sens avec une seconde longueur d'onde (λ1) (figure 2).

3. Système selon la revendication 1 ou 2 présentant les autres caractéristiques suivantes:
a) pour préparer le signal multiplexé par répartition en fréquence à transmettre, depuis le central (100) à un groupe d'abonnés, le central (100) contient:
- des dispositifs de modulation (M₁-M₃₅, Mᵣ) par lesquels les signaux d'information à distribuer aux abonnés modulent par modulation de fréquence des porteuses différentes,
- des dispositifs de modulation (203, 205) par lesquels les signaux d'information, individuels par abonné, à transmettre aux abonnés modulent des porteuses différentes à fréquences porteuses individuelles par abonné, et
- des dispositifs de mulitplexage (206, 207, 208, 210, 301, 305), qui regroupent les porteuses modulées, pour donner le signal multiplexé par répartition en fréquence (figure 3, figure 4);
b) le central contient un convertisseur électro-optique (120) qui convertit en un signal optique le signal multiplexé par répartition en fréquence par modulation de l'intensité de la lumière produite;
c) chez l'abonné (111) il y a des démodulateurs (FD₁ - FD₃₅, 500, 501, 502, 503) qui, à partir du signal multiplexé par répartition en fréquence, récupèrent les signaux d'information à diffuser et les signaux d'information, individuels par abonné, destinés à l'abonné, ainsi que des dispositifs de conversion (AM₁ - AM₃₅, 504) qui convertissent les signaux d'information, récupérés, en la forme d'origine (figure 5, figure 6).

4. Système selon la revendication 1 ou 2, présentant l'autre caractéristique suivante:
pour la préparation du signal mulitplexé par répartition en fréquence à transmettre du central (100) à un groupe d'abonnés, le central (100) contient:
- des dispositifs de modulation (203, 205) qui modulent des porteuses différentes, à fréquences porteuses individuelles par abonné, avec les signaux d'information, individuels par abonné, à transmettre aux abonnés appartenant à un groupe, et
- un dispositif de multiplexage (705) qui regroupe, pour donner un mélange d'ensemble de signaux (figure 8), ces porteuses modulées, avec un mélange de signaux qui contient une pluralité de porteuses, modulées en amplitude par les signaux d'information à diffuser.

5. Système selon la revendication 4, présentant les autres caractéristiques suivantes:
- le central contient un modulateur de fréquence à large bande (706) qui, par modulation de fréquence, module une porteuse avec le mélange d'ensemble de signaux,
- le central contient un convertisseur électro-optique (120) qui convertit en un signal optique la porteuse, modulée, par modulation de l'intensité de la lumière qu'il produit,
- chez l'abonné (111) existe un démodulateur de fréquence à large bande (800) qui démodule en fréquence le signal reçu et récupère de ce fait le mélange d'ensemble des signaux et il y existe des démodulateurs (500, 501, 502, 503) qui récupèrent les signaux d'information individuels par abonné destinés à l'abonné et des convertisseurs (504) qui convertissent en la forme d'origine les signaux d'information récupérés (figure 8, figure 9, figure 6).

6. Système selon la revendication 4, présentant les autres caractéristiques suivantes:
a) le central contient un convertisseur électro-optique (120) qui convertit en un signal optique le mélange d'ensemble de signaux par modulation de l'intensité de la lumière qu'il produit;
b) chez l'abonné (111) il existe des démodulateurs (500, 501, 502, 503) qui récupèrent les signaux d'information, individuels par abonné, destinés à l'abonné, ainsi que des convertisseurs (504) qui convertissent en la forme d'origine les signaux d'information récupérés (figure 6).

7. Système selon l'une des revendications précédentes, caractérisé par le fait qu'au lieu de la distribution, par des moyens optiques et par l'intermédiaire de guides d'ondes lumineuses individuels par abonné, du signal optique transmis au voisinage des abonnés (111), il se fait une conversion (901) dans le signal électrique dont la démodulation (902) et la distribution aux abonnés se font par l'intermédiaire de lignes électriques (K₁ à k₇) individuelles par abonné (figure 10).

8. Système selon l'une des revendications précédentes, caractérisé par le fait que les convertisseurs employés (120, 127) contiennent des circuits pour linéariser leurs caractéristiques.

9. Système selon l'une des revendications précédentes, excepté la revendication 5,
caractérisé par le fait que l'on divise le signal multiplexé par répartition en fréquence en plusieurs bandes partielles, que pour chacune des bandes partielles il y a un convertisseur électro-optique (W₁ à Wₙ) qui convertit le signal en un signal optique et que les signaux optiques qui apparaissent alors sont couplés dans l'unique guide d'ondes lumineuses (112) et transmis par l'intermédiaire de ce dernier (figure 12).

10. Système selon l'une des revendications précédentes, caractérisé par le fait que parallèlement à un guide d'ondes lumineuses (112), par lequel est transmis un signal optique à haut niveau de puissance, court une boucle optique ou électrique (181) et que, prés d'un convertisseur électro-optique (120) émettant dans le guide d'ondes lumineuses il y a un dispositif de surveillance (180) qui émet de la lumière ou un courant électrique le long de la boucle et qui, en cas d'interruption du chemin lumineux ou du chemin du courant, met hors circuit le convertisseur opto-électrique (120) (figure 13).

11. Système selon l'une des revendications 1 à 9, caractérisé par le fait qu'entre un convertisseur électro-optique (120) émettant de la lumière dans un guide d'ondes lumineuses (112) et le guide d'ondes lumineuses (112) est inséré un coupleur (183) qui découple la lumière réfléchie dans le guide d'ondes lumineuses (112), qu'il y a un détecteur (181) et un dispositif de surveillance (182) qui provoquent la mise hors circuit du convertisseur électro-optique (120) lorsque le niveau de la lumière réfléchie, découplée, dépasse une valeur de seuil prescrite (figure 14).

12. Système selon la revendication 11, caractérisé par le fait que le coupleur (183) couple également une partie de la lumière émise par le convertisseur électro-optique (120), qu'il y a un détecteur qui convertit la lumière ainsi découplée en un signal électrique et qu'il y a des circuits qui emploient le signal électrique pour un contre-couplage électrique du convertisseur électro-optique et qui, sur la base de la portion basse fréquence du signal électrique, règlent le point de travail du convertisseur électro-optique.

13. Système selon l'une des revendications précédentes, caractérisé par le fait que le signal multiplexé produit dans le central (100), au lieu d'être un signal multiplexé par répartition en fréquence avec des fréquences porteuses individuelles par abonné pour les signaux individuels par abonné, est un signal multiplexé par répartition dans le temps avec des intervalles de temps de séquence individuels par abonné pour les signaux individuels par abonné.

14. Système selon l'une des revendications 1 à 12, caractérisé par le fait que le signal multiplexé formé dans le central (100), au lieu d'être un signal multiplexé par répartition en fréquence avec fréquences porteuses individuelles par abonné pour les signaux individuels par abonné, est un signal multiplexé par répartition en code avec des codes individuels par abonné pour les signaux individuels par abonné.

15. Système selon l'une des revendications précédentes, caractérisé par le fait que les signaux à transmettre au central par les abonnés (111) du groupe, au lieu de moduler des porteuses à fréquences porteuses individuelles par abonné, sont convertis en signaux numériques avec codes individuels par abonné, qui sont convertis en signaux optiques au lieu de la porteuse modulée et de façon correspondante à celle-ci, et sont transmis au central.

16. Système selon l'une des revendications 1 à 14, caractérisé par le fait que les signaux à transmettre au central par les abonnés (111) du groupe au lieu de moduler des porteuses à fréquences porteuses individuelles par abonné, sont convertis en signaux numériques avec intervalles de temps actifs correspondant individuellement à chaque abonné, rapporté à une séquence, signaux numériques qui sont convertis en signaux optiques au lieu de la porteuse modulée et en correspondance avec celle-ci, et sont transmis au central.
